# EUROPEAN PATENT APPLICATION

(11) **EP 4 702 840 A1**
(43) Date of publication of application: **04.03.2026**
(21) Application number: 25198556.0
(22) Date of filing: 27.08.2025
(51) Int. Cl.: A01M 7/00

(54) **A MULTIMODE AUTONOMOUS FARMING MACHINE FOR UNIFORM AND VARIABLE PLANT TREATMENTS INCLUDING DEFOLIATION**

(30) Priority: 30.08.2024 US 202418821024
(71) Applicant: Deere & Company, Moline, IL 61265 (US)
(72) Inventor: PADWICK, Christopher Grant, Santa Clara, 95054 (US); EVANS, David, Santa Clara, 95054 (US); KULKARNI, Divya, Santa Clara, 95054 (US); ARORA, Ripudaman Singh, Santa Clara, 95054 (US)
(74) Representative: Scintilla Intellectual Property Ltd

(57) **Abstract**

A multimode autonomous farming machine capable of performing uniform and variable plant treatments including defoliation is described. This farming machine is capable of operating in various operational modes and treatment configurations, such as broadcast or spot mode, and uniform or variable treatment mode. In addition, the machine adjusts its mode and treatment configuration based on various factors such as present conditions in the operating environment, conditions of the farming machine itself, the treatment plan, and farming objectives. The autonomous machine uses a control system to input various data measurements to inform the appropriate mode(s) and treatment. Dynamic treatment mode selection increases efficiency and resource production in an agricultural field.

## Description

### BACKGROUND

### FIELD OF DISCLOSURE

This disclosure relates to the field of determining plant treatments for autonomous farming machines, and, more specifically, to determining an operation mode for a multi-modal autonomous farming machine to implement plant treatments based on plant characteristics and other conditions.

### DESCRIPTION OF RELATED ART

Within the scope of modern agriculture, machinery is generally engineered with a solitary treatment mode or configuration as its fundamental function. This unimodal configuration is a byproduct of various technological constraints. With traditional machines, the sensors and algorithms guiding machine learning or vision do not possess the capabilities to enable a higher level of modality in functionality (e.g., low resolution). Furthermore, traditional machine learning algorithms are limited in their ability to completely understand and respond to the varied and complex dynamics of agricultural conditions, as they are often trained for the primary function of the farming machine. These constraints render these machines unable to adapt or switch modes in response to changing farming needs.

The consequence of such a single-configuration design approach manifests as efficiency challenges in farming operations. Farming machines find themselves locked into a single mode of operation when the farming conditions or treatment requirements may call for an alternative mode for optimal results. This inflexibility in switching operation modes means even when a machine's current mode is not the best for a task, there is no easy way to change it and it must perform the task inefficiently. Therefore, there is a need for a versatile solution - a multimode farming machine capable of switching between different treatment modes.

### SUMMARY

In some aspects, the techniques described herein relate to a method determining a treatment for a multimode farming machine to apply treatments to identified plants with one or more of a plurality of treatment mechanisms, the multimode farming machine applying the treatments in a field including a plurality of regions as the multimode farming machine traverses the field, the method including: autonomously, for each region of the plurality of regions in the field: identifying, using images of the field captured by an image acquisition system, a plurality of plants in the region of the field; determining characteristics for each plant of the plurality of plants in the region; selecting one or more treatment configurations from a plurality of treatment configurations for the multimode farming machine in the region based on the determined characteristics, wherein the multimode farming machine is configured to implement treatments in each of the plurality of treatment configurations, the plurality of treatment configurations including: a spot treatment configuration, wherein a set of treatment mechanisms of the plurality of treatment mechanisms apply a treatment to a treatment area in the field including a plant of the plurality of plants, and a variable treatment configuration, wherein treatment mechanisms applying the treatment apply a variable rate treatment to plants in the field based on characteristics of the plants; and actuating one or more of the plurality of treatment mechanisms to treat the identified plants using the selected one or more treatment configurations for the region.

In some aspects, the techniques described herein relate to a method, wherein the selected one or more treatment configurations include the spot treatment configuration and the variable treatment configuration.

In some aspects, the techniques described herein relate to a method, wherein the plurality of treatment configurations includes: a broadcast treatment configuration wherein each treatment mechanism of the plurality of treatment mechanisms applies treatments using each treatment mechanism of the plurality of treatment mechanisms.

In some aspects, the techniques described herein relate to a method, wherein the plurality of treatment configurations includes: a uniform treatment configurations, wherein treatment mechanisms of the plurality of treatment mechanisms applying the treatment apply a uniform rate treatment to plants in the field based on determined characteristics of the plants.

In some aspects, the techniques described herein relate to a method, further including: in a subsequent region of the plurality of regions, detecting a change in one or more characteristics of the identified plants in the field as the multimode farming machine travels through the field; and responsive to detecting the change, selecting a different one or more treatment configurations from the plurality of treatment configurations based on the change in the one or more characteristics.

In some aspects, the techniques described herein relate to a method, further including: actuating the plurality of treatment mechanisms to treat the identified plants using the different one or more treatment configurations in the subsequent region.

In some aspects, the techniques described herein relate to a method, wherein determining characteristics for each plant in the field includes: identifying a first treatment prescription for a first plant and a first treatment area for the first plant, and selecting the one or more treatment configurations based on the first treatment prescription and the first treatment area for the first plant.

In some aspects, the techniques described herein relate to a method, wherein determining characteristics for each plant in the field includes: identifying a second treatment prescription for a second plant and a second treatment area for the second plant, wherein the first plant is a different plant type than the second plant; and selecting the one or more treatment configurations is based on the different plant types.

In some aspects, the techniques described herein relate to a method, wherein determining characteristics for each plant in the field includes determining a density of a first type of plant in the field, and selecting the one or more treatment configurations is based on the determined density for the first type of plant.

In some aspects, the techniques described herein relate to a method, wherein determining characteristics for each plant in the field includes determining a density of a second type of plant in the field different from the first type of plant in the field, and selecting the one or more treatment configurations is based on the determined density for the first type of plant and the determined density for the second type of plant.

In some aspects, the techniques described herein relate to a multimode farming machine including: an image acquisition system configured for capturing images of plants in a field including a plurality of regions; a plurality of treatment mechanisms, the plurality of treatment mechanisms configured to operate in a plurality of treatment configurations, the plurality of treatment configuration including: a spot treatment configuration, wherein a set of treatment mechanisms of the plurality of treatment mechanisms apply a treatment to a treatment area in the field including a plant, and a variable treatment configuration, wherein treatment mechanisms applying the treatment apply a variable rate treatment to plants in the field based on characteristics of the plants; one or more processors; and a non-transitory computer readable storage medium including computer program instructions for to applying treatments to identified plants with one or more of the plurality of treatment mechanisms as the multimode farming machine traverses the field, the computer program instructions, when executed by the one or more processors, causing the one or more processors to: autonomously, for each region of the plurality of regions in the field, identify, based on images captured by the image acquisition system, a plurality of plants in the region of the field, determine characteristics for each plant of the identified plants in the region, and selecting one or more treatment configurations from a plurality of treatment configurations for the multimode farming machine in the region based on the determined characteristics; and actuating one or more of the plurality of treatment mechanisms to treat the identified plants using the selected one or more treatment configurations for the region.

In some aspects, the techniques described herein relate to a multimode farming machine, wherein the selected one or more treatment configurations include the spot treatment configuration and the variable treatment configuration.

In some aspects, the techniques described herein relate to a multimode farming machine, wherein the plurality of treatment configurations includes: a broadcast treatment configuration wherein each treatment mechanism of the plurality of treatment mechanisms applies treatments using each treatment mechanism of the plurality of treatment mechanisms.

In some aspects, the techniques described herein relate to a multimode farming machine, wherein the plurality of treatment configurations includes: a uniform treatment configurations, wherein treatment mechanisms of the plurality of treatment mechanisms applying the treatment apply a uniform rate treatment to plants in the field based on determined characteristics of the plants.

In some aspects, the techniques described herein relate to a multimode farming machine, wherein the computer program instructions, when executed, further cause the one or more processors to: in a subsequent region of the plurality of regions, detect a change in one or more characteristics of the identified plants in the field as the multimode farming machine travels through the field; and responsive to detecting the change, select a different one or more treatment configurations from the plurality of treatment configurations based on the change in the one or more characteristics.

In some aspects, the techniques described herein relate to a multimode farming machine, wherein the computer program instructions, when executed, further causes the one or more processors to: actuate the plurality of treatment mechanisms to treat the identified plants using the different one or more treatment configurations in the subsequent region.

In some aspects, the techniques described herein relate to a multimode farming machine, wherein determining characteristics for each plant in the field further causes the one or more processors to: identify a first treatment prescription for a first plant and a first treatment area for the first plant, and select the one or more treatment configurations based on the first treatment prescription and the first treatment area for the first plant.

In some aspects, the techniques described herein relate to a multimode farming machine, wherein determining characteristics for each plant in the field further causes the one or more processors to: identify a second treatment prescription for a second plant and a second treatment area for the second plant, wherein the first plant is a different plant type than the second plant, and select the one or more treatment configurations based on the different plant types.

In some aspects, the techniques described herein relate to a multimode farming machine, wherein determining characteristics for each plant in the field further causes the one or more processor to: determine a density of a first type of plant in the field; and select the one or more treatment configurations based on the determined density for the first type of plant.

In some aspects, the techniques described herein relate to a multimode farming machine, wherein determining characteristics for each plant in the field further causes the one or more processors to: determine a density of a second type of plant in the field different from the first type of plant in the field, and select the one or more treatment configurations based on the determined density for the first type of plant and the determined density for the second type of plant.

In some aspects, the techniques described herein relate to a method for determining a variable rate treatment for a farming machine to apply to identified plants, the method including: accesses a plurality of images for each region of a plurality of regions in a field; applying a canopy recognition model to the plurality of images for each region of the plurality of regions, the canopy recognition model configured to, for each region: identify each plant in the region using the plurality of images for the region, identify, for each identified plant, pixels of the plurality of images representing a plant canopy for the plant, and determine, for each identified plant, canopy characteristics of the plant canopy based on the pixels; determining, for each plant, control signals for a variable rate treatment based on determined canopy characteristics of the plant canopy for the plant; and actuating, for each identified plant using the determined control signals for that plant, a treatment mechanism of the farming machine to apply the determined variable rate treatment to the plant.

In some aspects, the techniques described herein relate to a method, wherein identifying pixels in the plurality of images representing the plant canopy includes: identifying a lower height of the plant canopy relative to a substrate; identifying an upper height of the plant canopy relative to the substrate; and applying the canopy recognition model to pixels corresponding to heights between the lower height and the upper height.

In some aspects, the techniques described herein relate to a method, wherein identifying pixels in the plurality of images representing the plant canopy includes: identifying, based on the pixels of the plurality of images, one or more plant parts of each plant; determining, for each identified plant part, whether the identified plant part corresponds to the plant canopy; for each plant part corresponding to the plant canopy, defining those pixels as the plant canopy; and determining canopy characteristics based on the plant parts identified as the plant canopy.

In some aspects, the techniques described herein relate to a method, including: determining an aggregate canopy characteristic for the region based on the determined canopy characteristics for individual plants in the region; and determining the variable treatment for the region based on the aggregate canopy characteristic.

In some aspects, the techniques described herein relate to a method, wherein determining control signals for the variable rate treatment for each plant includes determining a treatment prescription and a treatment area for the plant.

In some aspects, the techniques described herein relate to a method, wherein determining control signals for the variable rate treatment for each plant includes determining a pulse width for the treatment mechanism to apply the treatment prescription in the treatment area.

In some aspects, the techniques described herein relate to a method, wherein determining control signals for the variable rate treatment for each plant includes determining signals to control one or more of a pressure for the treatment mechanism, a flow rate for the treatment mechanism, and a spray shape of the treatment mechanism.

In some aspects, the techniques described herein relate to a method, wherein: determining canopy characteristics of the plant canopy based on the pixels includes identifying a volume of leaves in the plant canopy, and determining control signals for the variable rate treatment for each plant in the region of the field based on determined canopy characteristics includes determining a defoliant treatment to reduce the volume of leaves in the plant canopy.

In some aspects, the techniques described herein relate to a method, including: in a subsequent region of the plurality of regions, detecting a change in one or more canopy characteristics of the identified plants in the field as the farming machine travels through the field; and responsive to detecting the change, determining a uniform treatment for the plurality of plants in the subsequent region based on the change in the one or more canopy characteristics.

In some aspects, the techniques described herein relate to a method, wherein actuating the treatment mechanism of the farming machine to apply the determined variable rate treatment to the plant includes implementing a configuration of a plurality of configurations for the farming machine.

In some aspects, the techniques described herein relate to a farming machine including: an image acquisition system configured for capturing images of plants in a field including a plurality of regions; a plurality of treatment mechanisms configured to apply variable treatments to plants in the field; one or more processors; and a non-transitory computer readable storage medium including computer program instructions for determining a variable rate treatment for a farming machine to apply to identified plants, the computer program instructions, when executed by the one or more processors, causing the one or more processors to: capture a plurality of images for each region of a plurality of regions in the field; apply a canopy recognition model to the plurality of images for each region of the plurality of regions, the canopy recognition model configured to, for each region: identify each plant in the region using the plurality of images for the region, identify, for each identified plant, pixels of the plurality of images representing a plant canopy for the plant, and determine, for each identified plant, canopy characteristics of the plant canopy based on the pixels; determine, for each pant, control signals for a variable rate treatment based on determined canopy characteristics of the plant canopy for the plant; and actuating, for each identified plant using the determined control signals for that plant, a treatment mechanism of the farming machine to apply the determined variable rate treatment to the plant.

In some aspects, the techniques described herein relate to a farming machine, wherein identifying pixels in the plurality of images representing the plant canopy further causes the one or more processors to: identify a lower height of the plant canopy relative to a substrate; identify an upper height of the plant canopy relative to the substrate; and apply the canopy recognition model to pixels corresponding to heights between the lower height and the upper height.

In some aspects, the techniques described herein relate to a farming machine, wherein identifying pixels in the plurality of images representing the plant canopy further causes the one or more processors to: identify, based on the pixels of the plurality of images, one or more plant parts of each plant; determine, for each identified plant part, whether the identified plant part corresponds to the plant canopy; for each plant part corresponding to the plant canopy, define those pixels as the plant canopy; and determine canopy characteristics based on the plant parts identified as the plant canopy.

In some aspects, the techniques described herein relate to a farming machine, wherein the computer program instructions, when executed, cause the one or more processors to: determine an aggregate canopy characteristic for the region based on the determined canopy characteristics for individual plants in the region; and determine g the variable treatment for the region based on the aggregate canopy characteristic.

In some aspects, the techniques described herein relate to a farming machine, wherein determining control signals for the variable rate treatment for each plant further causes the one or more processors to: determine a treatment prescription and a treatment area for the plant.

In some aspects, the techniques described herein relate to a farming machine, wherein determining control signals for the variable rate treatment for each plant further causes the one or more processors to: determine a pulse width for the treatment mechanism to apply the treatment prescription in the treatment area.

In some aspects, the techniques described herein relate to a farming machine, wherein determining control signals for the variable rate treatment for each plant further causes the one or more processors to: determine control signals to control one or more of a pressure for the treatment mechanism, a flow rate for the treatment mechanism, and a spray shape of the treatment mechanism.

In some aspects, the techniques described herein relate to a farming machine, wherein: determining canopy characteristics of the plant canopy based on the pixels further causes the one or more processors to identify a volume of leaves in the plant canopy, and determining control signals for the variable rate treatment for each plant in the region of the field based on determined canopy characteristics further causes the one or more processors to determine a defoliant treatment to reduce the volume of leaves in the plant canopy.

In some aspects, the techniques described herein relate to a farming machine, wherein the computer program instructions, when executed, cause the one or more processors to: in a subsequent region of the plurality of regions, detect a change in one or more canopy characteristics of the identified plants in the field as the farming machine travels through the field; and responsive to detecting the change, determine a uniform treatment for the plurality of plants in the subsequent region based on the change in the one or more canopy characteristics.

In some aspects, the techniques described herein relate to a farming machine, wherein actuating the treatment mechanism of the farming machine to apply the determined variable rate treatment to the plant further causes the one or more processors to: implement a configuration of a plurality of configurations for the farming machine.

### BRIEF DESCRIPTION OF DRAWINGS

FIG. 1A is an isometric view of a farming machine that performs farming actions of a treatment plan, in accordance with one example embodiment.
FIG. 1B is a top view of the farming machine in FIG. 1A, in accordance with one example embodiment.
FIG. 1C is an isometric view of another farming machine that performs farming actions of a treatment plan, in accordance with one example embodiment.
FIG. 2 is a block diagram of the system environment for the farming machine, in accordance with one or more example embodiments.
FIG. 3 illustrates a workflow for determining a variable rate treatment for a farming machine to apply to identified plants, in accordance with one or more example embodiments.
FIG. 4 illustrates a workflow for determining a variable rate treatment for a farming machine to apply to identified plants, in accordance with one or more example embodiments.

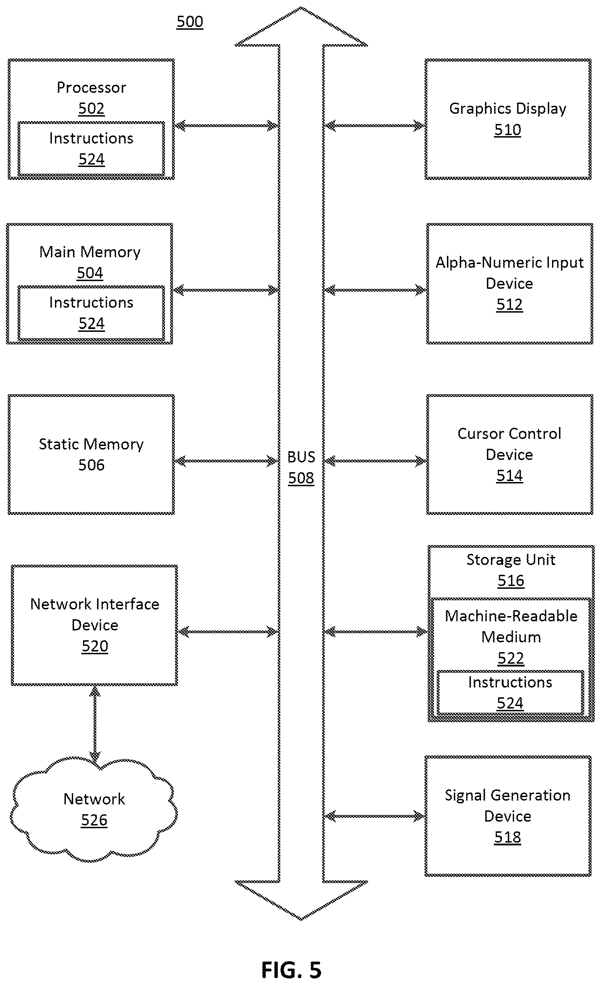

FIG. 5 is a block diagram illustrating components of an example machine for reading and executing instructions from a machine-readable medium, in accordance with one or more example embodiments.

The figures depict various embodiments for purposes of illustration only. One skilled in the art will readily recognize from the following discussion that alternative embodiments of the structures and methods illustrated herein may be employed without departing from the principles described herein.

### DETAILED DESCRIPTION

### I. INTRODUCTION

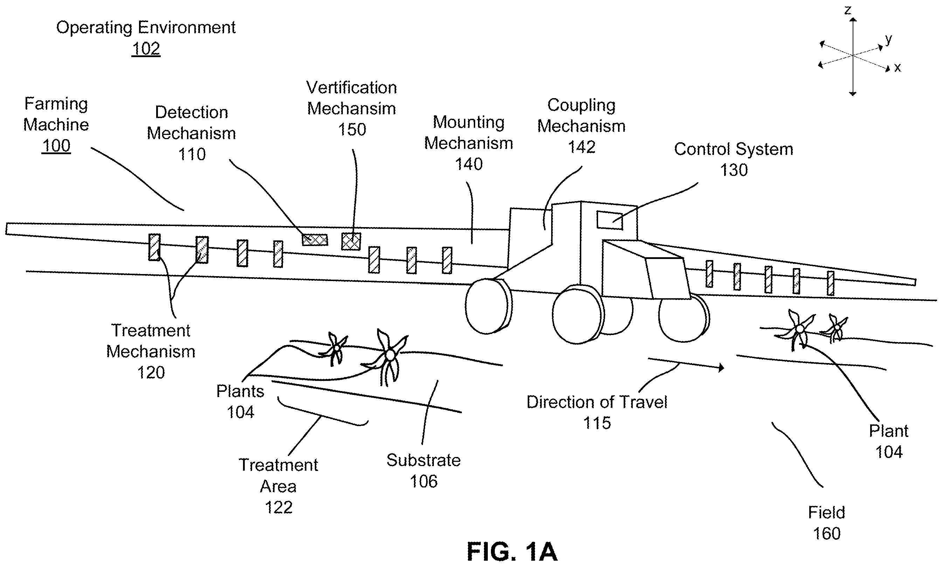

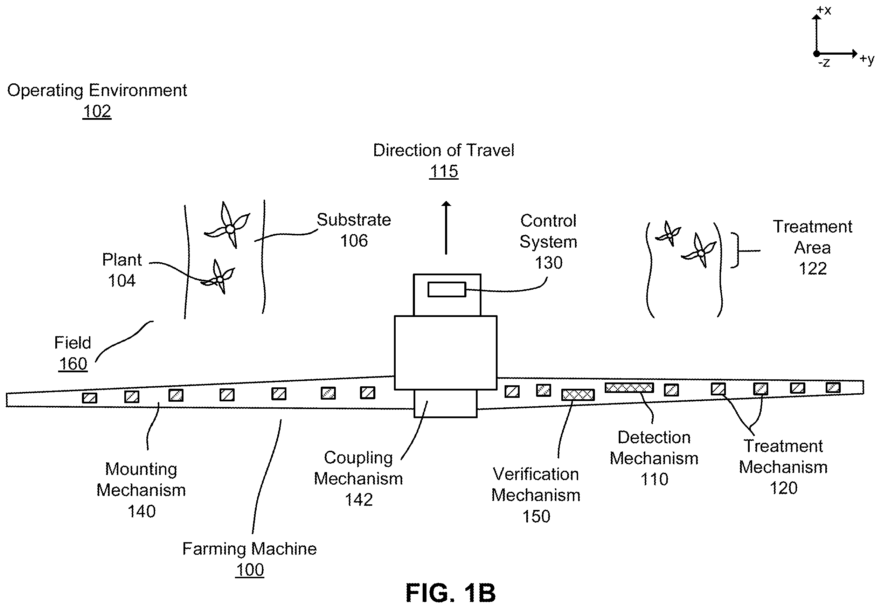

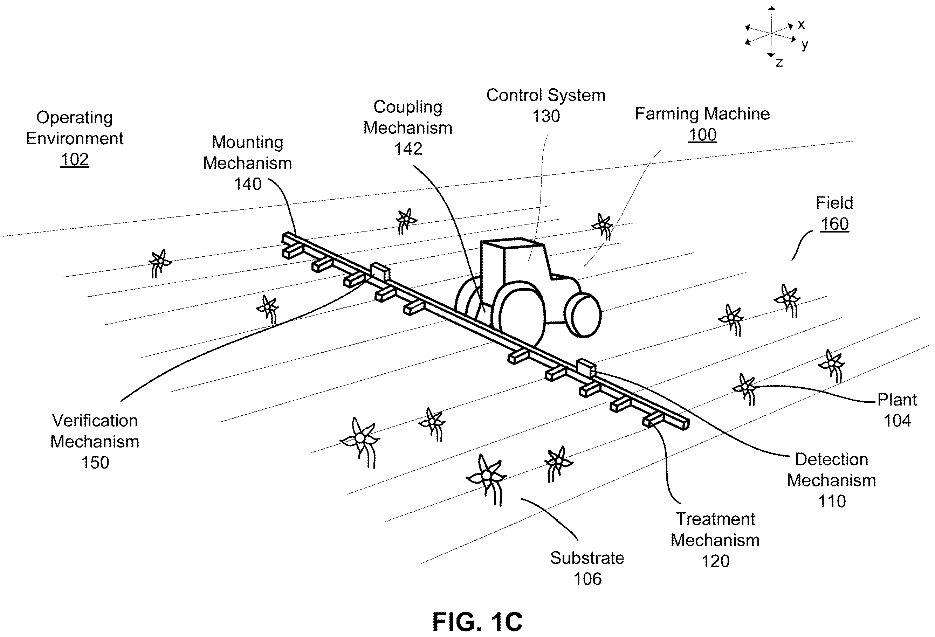

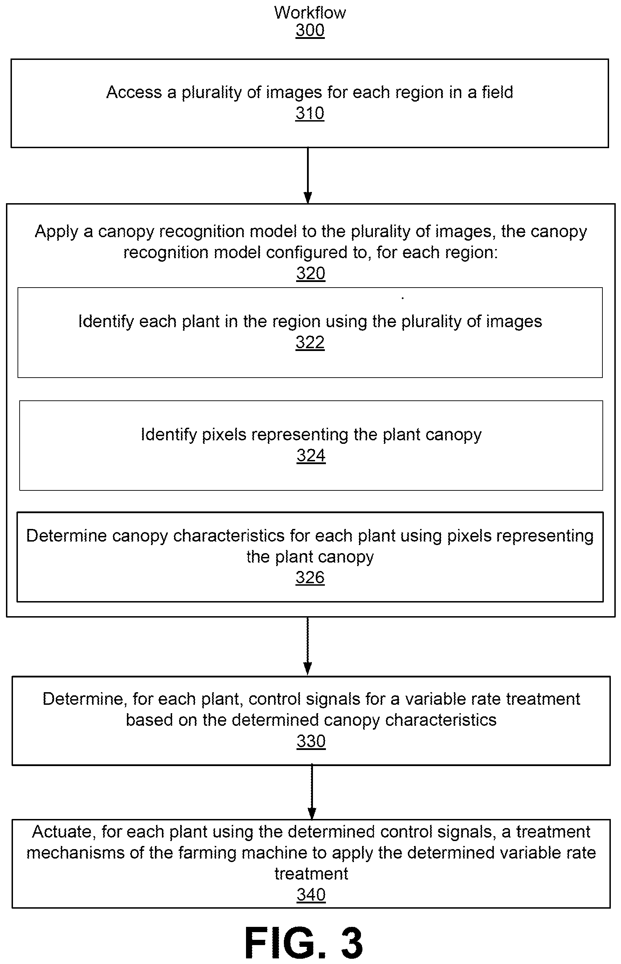

Embodiments relate to determining a treatment and a treatment configuration for an autonomous or semi-autonomous farming machine such that it can implement farming actions to accomplish a farming objective in a field. FIGs. 1-2 describe general information related to example farming machines. FIGs. 3-4 describe example implementations of a multimode autonomous farming machine that autonomously changes between treatment configurations based on a variety of operating environment factors and characteristics to perform farming action that accomplish a farming objective.

### II. FIELD MANAGEMENT AND TREATMENT PLANS

### Field Management

Agricultural managers ("managers") are responsible for managing farming operations in one or more fields. Managers work to implement a farming objective within those fields and select from among a variety of farming actions to implement that farming objective. Traditionally, managers are, for example, a farmer or agronomist that works the field but could also be other people and/or systems configured to manage farming operations within the field. For example, a manager could be an automated farming machine, a machine learned computer model, etc. In some cases, a manager may be a combination of the managers described above. For example, a manager may include a farmer assisted by a machine learned agronomy model and one or more automated farming machines or could be a farmer and an agronomist working in tandem.

Managers implement one or more farming objectives for a field. A farming objective is typically a macro-level goal for a field. For example, macro-level farming objectives may include treating crops with growth promotors, neutralizing weeds with growth regulators, harvesting a crop with the best possible crop yield, or any other suitable farming objective. However, farming objectives may also be a micro-level goal for the field. For example, micro-level farming objectives may include treating a particular plant in the field, repairing or correcting a part of a farming machine, requesting feedback from a manager, etc. Of course, there are many possible farming objectives and combinations of farming objectives, and the previously described examples are not intended to be limiting.

Farming objectives are accomplished by one or more farming machines performing a series of farming actions. Farming machines are described in greater detail below. Farming actions are any operation implementable by a farming machine within the field that works towards a farming objective. Consider, for example, a farming objective of harvesting a crop with the best possible yield. This farming objective requires a litany of farming actions, e.g., planting the field, fertilizing the plants 104, watering the plants 104, weeding the field, harvesting the plants 104, evaluating yield, etc. Similarly, each farming action pertaining to harvesting the crop may be a farming objective in and of itself. For instance, planting the field can require its own set of farming actions, e.g., preparing the soil, digging in the soil, planting a seed, etc.

In other words, managers implement a treatment plan in the field to accomplish a farming objective. A treatment plan is a hierarchical set of macro-level and/or micro-level objectives that accomplish the farming objective of the manager. Within a treatment plan, each macro or micro-objective may require a set of farming actions to accomplish, or each macro or micro-objective may be a farming action itself. So, to expand, the treatment plan is a temporally sequenced set of farming actions to apply to the field that the manager expects will accomplish the faming objective.

When executing a treatment plan in a field, the treatment plan itself and/or its constituent farming objectives and farming actions have various results. A result is a representation as to whether, or how well, a farming machine accomplished the treatment plan, farming objective, and/or farming action. A result may be a qualitative measure such as "accomplished" or "not accomplished," or may be a quantitative measure such as "40 pounds harvested," or "1.25 acres treated." Results can also be positive or negative, depending on the configuration of the farming machine or the implementation of the treatment plan. Moreover, results can be measured by sensors of the farming machine, input by managers, or accessed from a datastore or a network.

Traditionally, managers have leveraged their experience, expertise, and technical knowledge when implementing farming actions in a treatment plan. In a first example, a manager may spot check weed pressure in several areas of the field to determine when a field is ready for weeding. In a second example, a manager may refer to previous implementations of a treatment plan to determine the best time to begin planting a field. Finally, in a third example, a manager may rely on established best practices in determining a specific set of farming actions to perform in a treatment plan to accomplish a farming objective.

Leveraging manager and historical knowledge to make decisions for a treatment plan affects both spatial and temporal characteristics of a treatment plan. For instance, farming actions in a treatment plan have historically been applied to entire field rather than small portions of a field. To illustrate, when a manager decides to plant a crop, she plants the entire field instead of just a corner of the field having the best planting conditions; or, when the manager decides to weed a field, she weeds the entire field rather than just a few rows. Similarly, each farming action in the sequence of farming actions of a treatment plan are historically performed at approximately the same time. For example, when a manager decides to fertilize a field, she fertilizes the field at approximately the same time; or, when the manager decides to harvest the field, she does so at approximately the same time.

Notably though, farming machines have greatly advanced in their capabilities. For example, farming machines continue to become more autonomous, include an increasing number of sensors and measurement devices, employ higher amounts of processing power and connectivity, and implement various machine vision algorithms to enable managers to successfully implement a treatment plan.

Because of this increase in capability, managers are no longer limited to spatially and temporally monolithic implementations of farming actions in a treatment plan. Instead, managers may leverage advanced capabilities of farming machines to implement treatment plans that are highly localized and determined by real-time measurements in the field. In other words, rather than a manager applying a "best guess" treatment plan to an entire field, they can implement individualized and informed treatment plans for each plant in the field.

### III. FARMING MACHINE

### Overview

A farming machine that implements farming actions of a treatment plan may have a variety of configurations, some of which are described in greater detail below.

FIG. 1A is an isometric view of a farming machine 100 that performs farming actions of a treatment plan, according to one example embodiment, and FIG. 1B is a top view of the farming machine 100 in FIG. 1A. FIG. 1C is an isometric view of another farming machine 100 that performs farming actions of a treatment plan, in accordance with one example embodiment.

The farming machine 100 includes a detection mechanism 110, a treatment mechanism 120, and a control system 130. The farming machine 100 can additionally include a mounting mechanism 140, a verification mechanism 150, a power source, digital memory, communication apparatus, or any other suitable component that enables the farming machine 100 to implement farming actions in a treatment plan. Moreover, the described components and functions of the farming machine 100 are just examples, and a farming machine 100 can have different or additional components and functions other than those described below.

The farming machine 100 is configured to perform farming actions in a field 160, and the implemented farming actions are part of a treatment plan. To illustrate, the farming machine 100 implements a farming action which applies a treatment to one or more plants 104 and/or the substrate 106 within a geographic area. Here, the treatment farming actions are included in a treatment plan to regulate plant growth. As such, treatments are typically applied directly to a single plant 104, but can alternatively be directly applied to multiple plants 104, indirectly applied to one or more plants 104, applied to the environment 102 associated with the plant 104 (e.g., soil, atmosphere, or other suitable portion of the plant's environment adjacent to or connected by an environmental factors, such as wind), or otherwise applied to the plants 104.

In a particular example, the farming machine 100 is configured to implement a farming action which applies a treatment that necroses the entire plant 104 (e.g., weeding) or part of the plant 104 (e.g., pruning). In this case, the farming action can include dislodging the plant 104 from the supporting substrate 106, incinerating a portion of the plant 104 (e.g., with directed electromagnetic energy such as a laser), applying a treatment concentration of working fluid (e.g., fertilizer, hormone, water, etc.) to the plant 104, or treating the plant 104 in any other suitable manner.

In another example, the farming machine 100 is configured to implement a farming action which applies a treatment to regulate plant growth. Regulating plant growth can include promoting plant growth, promoting growth of a plant portion, hindering (e.g., retarding) plant 104 or plant portion growth, or otherwise controlling plant growth. Examples of regulating plant growth includes applying growth hormone to the plant 104, applying fertilizer to the plant 104 or substrate 106, applying a disease treatment or insect treatment to the plant 104, electrically stimulating the plant 104, watering the plant 104, pruning the plant 104, or otherwise treating the plant 104. Plant growth can additionally be regulated by pruning, necrosing, or otherwise treating the plants 104 adjacent to the plant 104.

### Operating Environment 102

The farming machine 100 operates in an operating environment 102. The operating environment 102 is the environment 102 surrounding the farming machine 100 while it implements farming actions of a treatment plan. The operating environment 102 may also include the farming machine 100 and its corresponding components itself.

The operating environment 102 typically includes a field 160, and the farming machine 100 generally implements farming actions of the treatment plan in the field 160. A field 160 is a geographic area where the farming machine 100 implements a treatment plan. The field 160 may be an outdoor plant field but could also be an indoor location that houses plants such as, e.g., a greenhouse, a laboratory, a grow house, a set of containers, or any other suitable environment 102.

A field 160 may include any number of field portions. A field portion is a subunit of a field 160. For example, a field portion may be a portion of the field 160 small enough to include a single plant 104, large enough to include many plants 104, or some other size. The farming machine 100 can execute different farming actions for different field portions. For example, the farming machine 100 may apply an herbicide for some field portions in the field 160, while applying a pesticide in another field portion. Moreover, a field 160 and a field portion are largely interchangeable in the context of the methods and systems described herein. That is, treatment plans and their corresponding farming actions may be applied to an entire field 160 or a field portion depending on the circumstances at play.

The operating environment 102 may also include plants 104. As such, farming actions the farming machine 100 implements as part of a treatment plan may be applied to plants 104 in the field 160. The plants 104 can be crops but could also be weeds or any other suitable plant 104. Some example crops include cotton, lettuce, soybeans, rice, carrots, tomatoes, corn, broccoli, cabbage, potatoes, wheat, or any other suitable commercial crop. The weeds may be grasses, broadleaf weeds, thistles, or any other suitable determinantal weed.

More generally, plants 104 may include a stem that is arranged superior to (e.g., above) the substrate 106 and a root system joined to the stem that is located inferior to the plane of the substrate 106 (e.g., below ground). The stem may support any branches, leaves, and/or fruits. The plant 104 can have a single stem, leaf, or fruit, multiple stems, leaves, or fruits, or any number of stems, leaves or fruits. The root system may be a tap root system or fibrous root system, and the root system may support the plant 104 position and absorb nutrients and water from the substrate 106. In various examples, the plant 104 may be a vascular plant 104, non-vascular plant 104, ligneous plant 104, herbaceous plant 104, or be any suitable type of plant 104.

Plants 104 in a field 160 may be grown in one or more plant 104 rows (e.g., plant 104 beds). The plant 104 rows are typically parallel to one another but do not have to be. Each plant 104 row is generally spaced between 2 inches and 45 inches apart when measured in a perpendicular direction from an axis representing the plant 104 row. Plant 104 rows can have wider or narrower spacings or could have variable spacing between multiple rows (e.g., a spacing of 12 in. between a first and a second row, a spacing of 16 in. a second and a third row, etc.).

Plants 104 within a field 160 may include the same type of crop (e.g., same genus, same species, etc.). For example, each field portion in a field 160 may include corn crops. However, the plants 104 within each field 160 may also include multiple crops (e.g., a first, a second crop, etc.). For example, some field portions may include lettuce crops while other field portions include pig weeds, or, in another example, some field portions may include beans while other field portions include corn. Additionally, a single field portion may include different types of crop. For example, a single field portion may include a soybean plant 104 and a grass weed.

The operating environment 102 may also include a substrate 106. As such, farming actions the farming machine 100 implements as part of a treatment plan may be applied to the substrate 106. The substrate 106 may be soil but can alternatively be a sponge or any other suitable substrate 106. The substrate 106 may include plants 104 or may not include plants 104 depending on its location in the field 160. For example, a portion of the substrate 106 may include a row of crops, while another portion of the substrate 106 between crop rows includes no plants 104.

### III.A Example Machine Configurations

### Detection mechanism(s)

The farming machine 100 may include a detection mechanism 110. The detection mechanism 110 identifies objects in the operating environment 102 of the farming machine 100. To do so, the detection mechanism 110 obtains information describing the environment 102 (e.g., sensor or image data), and processes that information to identify pertinent objects (e.g., plants 104, substrate 106, persons, etc.) in the operating environment 102. Identifying objects in the environment 102 further enables the farming machine 100 to implement farming actions in the field 160. For example, the detection mechanism 110 may capture an image of the field 160 and process the image with a plant treatment model that identifies plants 104 in the captured image. A plant treatment model may also determine farming actions to implement. The farming machine 100 then implements farming actions in the field 160 based on the output of the plant treatment model.

The farming machine 100 can include any number or type of detection mechanism 110 that may aid in determining and implementing farming actions. In some embodiments, the detection mechanism 110 includes one or more sensors. For example, the detection mechanism 110 can include a multispectral camera, a stereo camera, a CCD camera, a single lens camera, a CMOS camera, hyperspectral imaging system, LIDAR system (light detection and ranging system), a depth sensing system, dynamometer, IR camera, thermal camera, humidity sensor, light sensor, temperature sensor, or any other suitable sensor. Further, the detection mechanism 110 may include an array of sensors (e.g., an array of cameras) configured to capture information about the environment 102 surrounding the farming machine 100. For example, the detection mechanism 110 may include an array of cameras configured to capture an array of pictures representing the environment 102 surrounding the farming machine 100. The detection mechanism 110 may also be a sensor that measures a state of the farming machine 100. For example, the detection mechanism 110 may be a speed sensor, a heat sensor, or some other sensor that can monitor the state of a component of the farming machine 100. Additionally, the detection mechanism 110 may also be a sensor that measures components during implementation of a farming action. For example, the detection mechanism 110 may be a flow rate monitor, a grain harvesting sensor, a mechanical stress sensor etc. Whatever the case, the detection mechanism 110 senses information about the operating environment 102 (including the farming machine 100).

A detection mechanism 110 may be mounted at any point on the mounting mechanism 140. Depending on where the detection mechanism 110 is mounted relative to the treatment mechanism 120, one or the other may pass over a geographic area in the field 160 before the other. For example, the detection mechanism 110 may be positioned on the mounting mechanism 140 such that it traverses over a geographic location before the treatment mechanism 120 as the farming machine 100 moves through the field 160. In another examples, the detection mechanism 110 is positioned to the mounting mechanism 140 such that the two traverse over a geographic location at substantially the same time as the farming machine 100 moves through the filed. Similarly, the detection mechanism 110 may be positioned on the mounting mechanism 140 such that the treatment mechanism 120 traverses over a geographic location before the detection mechanism 110 as the farming machine 100 moves through the field 160. The detection mechanism 110 may be statically mounted to the mounting mechanism 140, or may be removably or dynamically coupled to the mounting mechanism 140. In other examples, the detection mechanism 110 may be mounted to some other surface of the farming machine 100 or may be incorporated into another component of the farming machine 100.

### Verification mechanism(s)

The farming machine 100 may include a verification mechanism 150. Generally, the verification mechanism 150 records a measurement of the operating environment 102 and the farming machine 100 may use the recorded measurement to verify or determine the extent of an implemented farming action (i.e., a result of the farming action).

To illustrate, consider an example where a farming machine 100 implements a farming action based on a measurement of the operating environment 102 by the detection mechanism 110. The verification mechanism 150 records a measurement of the same geographic area measured by the detection mechanism 110 and where farming machine 100 implemented the determined farming action. The farming machine 100 then processes the recorded measurement to determine the result of the farming action. For example, the verification mechanism 150 may record an image of the geographic region surrounding a plant 104 identified by the detection mechanism 110 and treated by a treatment mechanism 120. The farming machine 100 may apply a treatment detection algorithm to the recorded image to determine the result of the treatment applied to the plant 104.

Information recorded by the verification mechanism 150 can also be used to empirically determine operation parameters of the farming machine 100 that will obtain the desired effects of implemented farming actions (e.g., to calibrate the farming machine 100, to modify treatment plans, etc.). For instance, the farming machine 100 may apply a calibration detection algorithm to a measurement recorded by the farming machine 100. In this case, the farming machine 100 determines whether the actual effects of an implemented farming action are the same as its intended effects. If the effects of the implemented farming action are different than its intended effects, the farming machine 100 may perform a calibration process. The calibration process changes operation parameters of the farming machine 100 such that effects of future implemented farming actions are the same as their intended effects. To illustrate, consider the previous example where the farming machine 100 recorded an image of a treated plant 104. There, the farming machine 100 may apply a calibration algorithm to the recorded image to determine whether the treatment is appropriately calibrated (e.g., at its intended location in the operating environment 102). If the farming machine 100 determines that the farming machine 100 is not calibrated (e.g., the applied treatment is at an incorrect location), the farming machine 100 may calibrate itself such that future treatments are in the correct location. Other example calibrations are also possible.

The verification mechanism 150 can have various configurations. For example, the verification mechanism 150 can be substantially similar (e.g., be the same type of mechanism as) the detection mechanism 110 or can be different from the detection mechanism 110. In some cases, the detection mechanism 110 and the verification mechanism 150 may be one in the same (e.g., the same sensor). In an example configuration, the verification mechanism 150 is positioned distal the detection mechanism 110 relative the direction of travel 115, and the treatment mechanism 120 is positioned there between. In this configuration, the verification mechanism 150 traverses over a geographic location in the operating environment 102 after the treatment mechanism 120 and the detection mechanism 110. However, the mounting mechanism 140 can retain the relative positions of the system components in any other suitable configuration. In some configurations, the verification mechanism 150 can be included in other components of the farming machine 100.

The farming machine 100 can include any number or type of verification mechanism 150. In some embodiments, the verification mechanism 150 includes one or more sensors. For example, the verification mechanism 150 can include a multispectral camera, a stereo camera, a CCD camera, a single lens camera, a CMOS camera, hyperspectral imaging system, LIDAR system (light detection and ranging system), a depth sensing system, dynamometer, IR camera, thermal camera, humidity sensor, light sensor, temperature sensor, or any other suitable sensor. Further, the verification mechanism 150 may include an array of sensors (e.g., an array of cameras) configured to capture information about the environment 102 surrounding the farming machine 100. For example, the verification mechanism 150 may include an array of cameras configured to capture an array of pictures representing the operating environment 102. Treatment mechanism(s)

The farming machine 100 may include a treatment mechanism 120. The treatment mechanism 120 can implement farming actions in the operating environment 102 of a farming machine 100. For instance, a farming machine 100 may include a treatment mechanism 120 that applies a treatment to a plant 104, a substrate 106, or some other object in the operating environment 102. More generally, the farming machine 100 employs the treatment mechanism 120 to apply a treatment to a treatment area 122, and the treatment area 122 may include anything within the operating environment 102 (e.g., a plant 104 or the substrate 106). In other words, the treatment area 122 may be any portion of the operating environment 102.

When the treatment is a plant treatment, the treatment mechanism 120 applies a treatment to a plant 104 in the field 160. The treatment mechanism 120 may apply treatments to identified plants or non-identified plants. For example, the farming machine 100 may identify and treat a specific plant (e.g., plant 104) in the field 160. Alternatively, or additionally, the farming machine 100 may identify some other trigger that indicates a plant treatment and the treatment mechanism 120 may apply a plant treatment. Some example plant treatment mechanisms 120 include: one or more spray nozzles, one or more electromagnetic energy sources (e.g., a laser), one or more physical implements configured to manipulate plants, one or more vibrational energy sources, but other plant 104 treatment mechanisms 120 are also possible.

Additionally, when the treatment is a plant treatment, the effect of treating a plant 104 with a treatment mechanism 120 may include any of plant necrosis, plant growth stimulation, plant portion necrosis or removal, plant portion growth stimulation, or any other suitable treatment effect. Moreover, the treatment mechanism 120 can apply a treatment that dislodges a plant 104 from the substrate 106, severs a plant 104 or portion of a plant 104 (e.g., cutting), incinerates a plant 104 or portion of a plant 104, electrically stimulates a plant 104 or portion of a plant 104, fertilizes or promotes growth (e.g., with a growth hormone) of a plant 104, waters a plant 104, applies light or some other radiation to a plant 104, and/or injects one or more working fluids into the substrate 106 adjacent to a plant 104 (e.g., within a threshold distance from the plant). Other plant treatments are also possible. When applying a plant treatment, the treatment mechanisms 120 may be configured to spray a treatment product such as one or more of: an herbicide, a fungicide, insecticide, some other pesticide, or water.

When the treatment is a substrate treatment, the treatment mechanism 120 applies a treatment to some portion of the substrate 106 in the field 160. The treatment mechanism 120 may apply treatments to identified areas of the substrate 106, or non-identified areas of the substrate 106. For example, the farming machine 100 may identify and treat an area of substrate 106 in the field 160. Alternatively, or additionally, the farming machine 100 may identify some other trigger that indicates a substrate 106 treatment and the treatment mechanism 120 may apply a treatment to the substrate 106. Some example treatment mechanisms 120 configured for applying treatments to the substrate 106 include: one or more spray nozzles, one or more electromagnetic energy sources, one or more physical implements configured to manipulate the substrate 106, but other substrate 106 treatment mechanisms 120 are also possible.

Of course, the farming machine 100 is not limited to treatment mechanisms 120 for plants 104 and substrates 106. The farming machine 100 may include treatment mechanisms 120 for applying various other treatments to objects in the field 160. Depending on the configuration, the farming machine 100 may include various numbers of treatment mechanisms 120 (e.g., 1, 2, 5, 20, 60, etc.). A treatment mechanism 120 may be fixed (e.g., statically coupled) to the mounting mechanism 140 or attached to the farming machine 100. Alternatively, or additionally, a treatment mechanism 120 may movable (e.g., translatable, rotatable, etc.) on the farming machine 100. In one configuration, the farming machine 100 includes a single treatment mechanism 120. In this case, the treatment mechanism 120 may be actuatable to align the treatment mechanism 120 to a treatment area 122. In a second variation, the farming machine 100 includes a treatment mechanism 120 assembly comprising an array of treatment mechanisms 120. In this configuration, a treatment mechanism 120 may be a single treatment mechanism 120, a combination of treatment mechanisms 120, or the treatment mechanism 120 assembly. Thus, either a single treatment mechanism 120, a combination of treatment mechanisms 120, or the entire assembly may be selected to apply a treatment to a treatment area 122. Similarly, either the single, combination, or entire assembly may be actuated to align with a treatment area, as needed. In some configurations, the farming machine 100 may align a treatment mechanism 120 with an identified object in the operating environment 102. That is, the farming machine 100 may identify an object in the operating environment 102 and actuate the treatment mechanism 120 such that its treatment area aligns with the identified object.

A treatment mechanism 120 may be operable between a standby mode and a treatment mode. In the standby mode the treatment mechanism 120 does not apply a treatment, and in the treatment mode the treatment mechanism 120 is controlled by the control system 130 to apply the treatment. However, the treatment mechanism 120 can be operable in any other suitable number of operation modes.

### Control system(s)

The farming machine 100 includes a control system 130. The control system 130 controls operation of the various components and systems on the farming machine 100. For instance, the control system 130 can obtain information about the operating environment 102, processes that information to identify a farming action to implement (e.g., via a plant treatment model), and implement the identified farming action with system components of the farming machine 100.

The control system 130 can receive information from the detection mechanism 110, the verification mechanism 150, the treatment mechanism 120, and/or any other component or system of the farming machine 100. For example, the control system 130 may receive measurements from the detection mechanism 110 or verification mechanism 150, or information relating to the state of a treatment mechanism 120 or implemented farming actions from a verification mechanism 150. Other information is also possible.

Similarly, the control system 130 can provide input to the detection mechanism 110, the verification mechanism 150, and/or the treatment mechanism 120. For instance, the control system 130 may be configured input and control operating parameters of the farming machine 100 (e.g., speed, direction). Similarly, the control system 130 may be configured to input and control operating parameters of the detection mechanism 110 and/or verification mechanism 150. Operating parameters of the detection mechanism 110 and/or verification mechanism 150 may include processing time, location and/or angle of the detection mechanism 110, image capture intervals, image capture settings, etc. Other inputs are also possible. Finally, the control system may be configured to generate machine inputs for the treatment mechanism 120. That is, translating a farming action of a treatment plan into machine instructions implementable by the treatment mechanism 120.

The control system 130 can be operated by a user operating the farming machine 100, wholly or partially autonomously, operated by a user connected to the farming machine 100 by a network, or any combination of the above. For instance, the control system 130 may be operated by an agricultural manager sitting in a cabin of the farming machine 100, or the control system 130 may be operated by an agricultural manager connected to the control system 130 via a wireless network. In another example, the control system 130 may implement an array of control algorithms, machine vision algorithms, decision algorithms, etc. that allow it to operate autonomously or partially autonomously.

The control system 130 may be implemented by a computer or a system of distributed computers. The computers may be connected in various network environments. For example, the control system 130 may be a series of computers implemented on the farming machine 100 and connected by a local area network. In another example, the control system 130 may be a series of computers implemented on the farming machine 100, in the cloud, a client device and connected by a wireless area network.

The control system 130 can apply one or more computer models to determine and implement farming actions in the field 160. For example, the control system 130 can apply a plant treatment model to images acquired by the detection mechanism 110 to determine and implement farming actions. The control system 130 may be coupled to the farming machine 100 such that an operator (e.g., a driver) can interact with the control system 130. In other embodiments, the control system 130 is physically removed from the farming machine 100 and communicates with system components (e.g., detection mechanism 110, treatment mechanism 120, etc.) wirelessly.

In some configurations, the farming machine 100 may additionally include a communication apparatus, which functions to communicate (e.g., send and/or receive) data between the control system 130 and a set of remote devices. The communication apparatus can be a Wi-Fi communication system, a cellular communication system, a short-range communication system (e.g., Bluetooth, NFC, etc.), or any other suitable communication system.

### Other Machine Components

In various configurations, the farming machine 100 may include any number of additional components.

For instance, the farming machine 100 may include a mounting mechanism 140. The mounting mechanism 140 provides a mounting point for the components of the farming machine 100. That is, the mounting mechanism 140 may be a chassis or frame to which components of the farming machine 100 may be attached but could alternatively be any other suitable mounting mechanism 140. More generally, the mounting mechanism 140 statically retains and mechanically supports the positions of the detection mechanism 110, the treatment mechanism 120, and the verification mechanism 150. In an example configuration, the mounting mechanism 140 extends outward from a body of the farming machine 100 such that the mounting mechanism 140 is approximately perpendicular to the direction of travel 115. In some configurations, the mounting mechanism 140 may include an array of treatment mechanisms 120 positioned laterally along the mounting mechanism 140. In some configurations, the farming machine 100 may not include a mounting mechanism 140, the mounting mechanism 140 may be alternatively positioned, or the mounting mechanism 140 may be incorporated into any other component of the farming machine 100.

The farming machine 100 may include locomoting mechanisms. The locomoting mechanisms may include any number of wheels, continuous treads, articulating legs, or some other locomoting mechanism(s). For instance, the farming machine 100 may include a first set and a second set of coaxial wheels, or a first set and a second set of continuous treads. In the either example, the rotational axis of the first and second set of wheels/treads are approximately parallel. Further, each set is arranged along opposing sides of the farming machine 100. Typically, the locomoting mechanisms are attached to a drive mechanism that causes the locomoting mechanisms to translate the farming machine 100 through the operating environment 102. For instance, the farming machine 100 may include a drive train for rotating wheels or treads. In different configurations, the farming machine 100 may include any other suitable number or combination of locomoting mechanisms and drive mechanisms.

The farming machine 100 may also include one or more coupling mechanisms 142 (e.g., a hitch). The coupling mechanism 142 functions to removably or statically couple various components of the farming machine 100. For example, a coupling mechanism may attach a drive mechanism to a secondary component such that the secondary component is pulled behind the farming machine 100. In another example, a coupling mechanism may couple one or more treatment mechanisms 120 to the farming machine 100.

The farming machine 100 may additionally include a power source, which functions to power the system components, including the detection mechanism 110, control system 130, and treatment mechanism 120. The power source can be mounted to the mounting mechanism 140, can be removably coupled to the mounting mechanism 140, or can be incorporated into another system component (e.g., located on the drive mechanism). The power source can be a rechargeable power source (e.g., a set of rechargeable batteries), an energy harvesting power source (e.g., a solar system), a fuel consuming power source (e.g., a set of fuel cells or an internal combustion system), or any other suitable power source. In other configurations, the power source can be incorporated into any other component of the farming machine 100.

### III.B System Environment

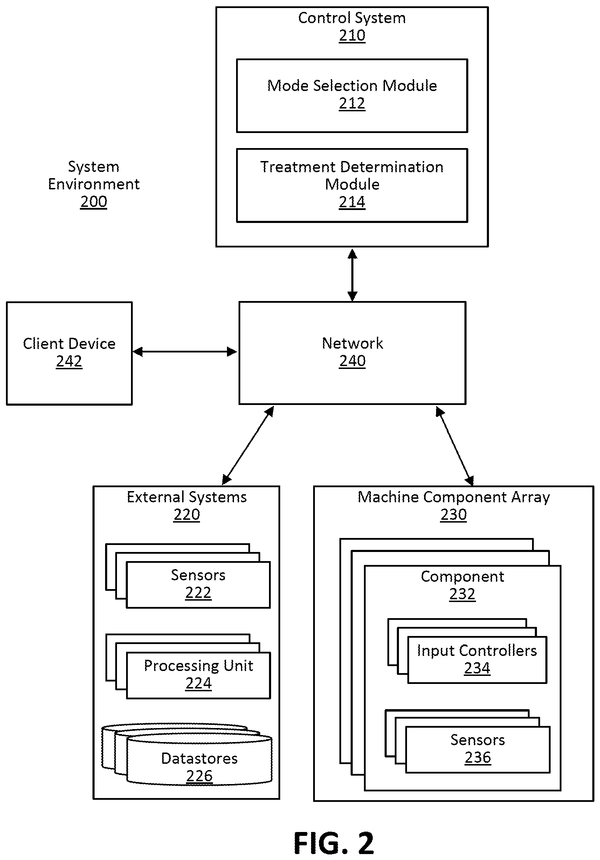

FIG. 2 is a block diagram of the system environment for the farming machine 100, in accordance with one or more example embodiments. In this example, the control system 210 (e.g., control system 130) is connected to external systems 220, a machine component array 230, and a client device 242 via a network 240 within the system environment 200.

The external systems 220 are any system that can generate data representing information useful for determining and implementing farming actions in a field. External systems 220 may include one or more sensors 222, one or more processing units 224, and one or more datastores 226. The one or more sensors 222 can measure the field 160, the operating environment 102, the farming machine 100, etc. and generate data representing those measurements. For instance, the sensors 222 may include a rainfall sensor, a wind sensor, heat sensor, a camera, etc. The processing units 2240 may process measured data to provide additional information that may aid in determining and implementing farming actions in the field. For instance, a processing unit 224 may access an image of a field 160 and calculate a weed pressure from the image or may access historical weather information for a field 160 to generate a forecast for the field. Datastores 226 store historical information regarding the farming machine 100, the operating environment 102, the field 160, etc. that may be beneficial in determining and implementing farming actions in the field. For instance, the datastore 226 may store results of previously implemented treatment plans and farming actions for a field 160, a nearby field, and or the region. The historical information may have been obtained from one or more farming machines (i.e., measuring the result of a farming action from a first farming machine with the sensors of a second farming machine). Further, the datastore 226 may store results of specific faming actions in the field 160, or results of farming actions taken in nearby fields having similar characteristics. The datastore 226 may also store historical weather, flooding, field use, planted crops, etc. for the field and the surrounding area. Finally, the datastores 226 may store any information measured by other components in the system environment 200.

The machine component array 230 includes one or more components 232. Components 232 are elements of the farming machine 100 that can take farming actions (e.g., a treatment mechanism 120). As illustrated, each component has one or more input controllers 234 and one or more sensors 236, but a component may include only sensors 236 or only input controllers 234. An input controller 234 controls the function of the component 232. For example, an input controller 234 may receive machine commands via the network 240 and actuate the component 232 in response. A sensor 236 generates data representing measurements of the operating environment 102 and provides that data to other systems and components within the system environment 200. The measurements may be of a component 232, the farming machine 100, the operating environment 102, etc. For example, a sensor 236 may measure a configuration or state of the component 232 (e.g., a setting, parameter, power load, etc.), measure conditions in the operating environment 102 (e.g., moisture, temperature, etc.), capture information representing the operating environment 102 (e.g., images, depth information, distance information), and generate data representing the measurement(s).

The control system 210 receives information from external systems 220, the machine component array 230, and/or the client device 242 and implements a treatment plan in a field with a farming machine. The control system 210 includes a mode selection module 212 and a treatment determination module 214 but may include additional or fewer modules. Moreover, the functionality of the various modules may be different than described herein, and/or may be provided by different elements in the system environment 200. At a high level, in implementing the treatment plan, the control system 210 may use a mode selection module 212 to determine a treatment configuration of a farming machine (e.g., operational mode and/or treatment mode), and may use the treatment determination module 214 to determine treatments for a treatment plan to achieve the farming objective. The control system 210 and its constituent modules are described in greater detail below.

The client device 242 is one or more computing devices capable of receiving user input as well as transmitting and/or receiving data via the network 240. In one embodiment, a client device 242 is a conventional computer system, such as a desktop or a laptop computer. Alternatively, a client device 242 may be a device having computer functionality, such as a personal digital assistant (PDA), a mobile telephone, a smartphone, or another suitable device. A client device 242 is configured to communicate via the network 240. In one embodiment, a client device 242 executes an application allowing a user of the client device 242 to interact with the control system 210. For example, a client device 242 executes a browser application to enable interaction between the client device 242 and the control system 210 via the network 240. In another embodiment, a client device 242 interacts with the control system 210 through an application programming interface (API) running on a native operating system of the client device 242, such as IOS^{®} or ANDROID^{™}. The client device 242 may be used to interact with a farming machine 100 implementing a treatment plan in a field.

The network 250 connects nodes of the system environment 200 to allow microcontrollers and devices to communicate with each other. In some embodiments, the components are connected within the network as a Controller Area Network (CAN). In this case, within the network each element has an input and output connection, and the network 250 can translate information between the various elements. For example, the network 250 receives input information from the external systems 220 array and component array 230, processes the information, and transmits the information to the control system 210. The control system 210 generates a farming action based on the information and transmits instructions to implement the farming action to the appropriate component(s) 232 of the component array 230.

Additionally, the system environment 200 may be other types of network environments and include other networks, or a combination of network environments with several networks. For example, the system environment 200, can be a network such as the Internet, a LAN, a MAN, a WAN, a mobile wired or wireless network, a private network, a virtual private network, a direct communication line, and the like. In some embodiments, the network 240 may comprise any combination of local area and/or wide area networks, using both wired and/or wireless communication systems. In one embodiment, the network 240 uses standard communications technologies and/or protocols.

### IV. MULTIMODE FARMING MACHINES

### Operational Modes

As described above, traditional farming machines are typically configured to operate in one of two operational modes: a broadcast mode or a spot-specific mode ("spot mode"). Contrary to traditional farming machines that enable either broadcast mode or spot mode, the farming machine (e.g., farming machine 100) described herein is configured to operate in both broadcast mode and spot mode based on conditions present in the operating environment (e.g., operating environment 102).

To illustrate, consider the farming machine described herein. The farming machine is operating in an operating environment treating plants (e.g., plants 104) with a growth regulator. The treatment plant for the farming machine calls for the farming machine to autonomously treat the plants (e.g., performing farming actions in the treatment plan) in a manner that creates the highest crop yield at the end of the season (e.g., the farming objective).

At the beginning of the day, the operating conditions in the operating environment surrounding the farming machine are pristine and the farming machine can identify and treat plants using spot mode. However, as the day progresses, operating conditions in the operating environment deteriorate (e.g., inclement weather, high winds, poor substrate conditions, etc.) and the farming machine is no longer able to operate in spot mode efficiently. For example, the various models used by spot mode may be negatively affected by the operating conditions (e.g., lower identification rates), deterioration of the operating environment (e.g., rain), mechanical issues on the farming machine (e.g., component failure), etc. Whatever the cause, the farming machine is no longer able to operate in spot mode to achieve the farming objective. As such, the farming machine begins to operate in broadcast mode to compensate for issues created by the deteriorating operating conditions in the operating environment. By doing so, the farming machine is still able to achieve the farming objective.

The farming machine can operate in several treatment configurations. One treatment configuration is the broadcast operational mode. In broadcast mode, the farming machine is configured to apply a treatment to all the treatment areas (e.g., treatment area 122) of all the treatment mechanism(s) (e.g., treatment mechanism 120) of the farming machine. In broadcast mode, the farming machine applies the same treatment using every treatment mechanism of the farming machine. For example, the farming machine may apply a blanket insecticide treatment using all of its treatment mechanisms as it travels through a field. In this operational mode, the farming machine will "broadcast" its treatment to every object that passes below the treatment mechanisms as it travels through a field.

Additionally, one treatment configuration of the farming machine is spot mode. In spot mode, a farming machine is configured to apply a treatment to a subset of treatment areas corresponding to a subset of treatment mechanisms of the farming machine. In other words, the farming machine only activates the treatment mechanisms necessary to apply the treatment. The subset of treatment areas and treatment mechanisms are selected using various identification and detection algorithms implemented by the control system (e.g., control system 210). For example, the farming machine may apply a specific fungicide treatment to specific plants identified in a field using appropriate treatment mechanisms when the identified plant passes beneath the appropriate treatment mechanism as it travels through the field. Overall, in this operational mode, the farming machine will see an object for treatment (e.g., a plant) and treat that object with the treatment using the treatment mechanism(s) appropriate to treat that object.

### Treatment Modes

As described above, traditional farming machines have a single treatment configuration. For instance, a traditional farming machine operates in one of two treatment modes: a uniform rate treatment mode ("uniform mode") or a variable rate treatment mode ("variable mode"). Contrary to traditional farming machines that enable either uniform mode or variable mode, the farming machine (e.g., farming machine 100) described has various treatment configurations, including both uniform mode and variable mode. The farming machine may select a treatment configuration for uniform mode and variable mode based on conditions present in the operating environment (e.g., operating environment 102).

To illustrate, consider the farming machine described herein. The farming machine is operating in an operating environment treating plants (e.g., plants 104) with fertilizers. The treatment plan for the farming machine calls for the farming machine to autonomously fertilize the plants (e.g., performing farming actions in the treatment plan) in a manner that optimizes a price per bushel of the crops in the field (e.g., the farming objective).

At the beginning of the day, the operating conditions in the operating environment surrounding the farming machine are suboptimal and the farming machine is unable to confidently distinguish characteristics of the soil that would enable accruable variable rate fertilizer treatments. As such, the farming machine operates in the uniform mode because applying a prescribed amount of fertilizer (for all areas of the field) increases the price per bushel rather than applying no fertilizer. As the day progresses, the operating conditions in the operating environment improve and the farming machine can now confidently distinguish characteristics in the soil. As such, the farming machine begins to apply treatments using the variable mode because, in aggregate, treatments applied using variable rates lead to a smaller amount of total fertilizer applied to the field and increases the price per bushel of crops in the field.

The farming machine can operate in several treatment configurations. One treatment configuration is the uniform treatment mode. In uniform mode, the farming machine is configured to apply the same treatment to all the treatment areas (e.g., treatment area 122) of the treatment mechanism(s) (e.g., treatment mechanism 120) actuated to treat a plant. Uniform mode may be implemented in broadcast mode or spot mode. of the farming machine. In uniform mode, the farming machine applies the same treatment for every treatment applied by the farming machine (whether broadcast or spot). For example, the farming machine may apply a uniform herbicide does in spot mode to all weeds identified in a field or apply a uniform fungicide treatment in broadcast mode in the field.

Additionally, one treatment configuration of the farming machine is variable treatment mode. In variable mode, a farming machine is configured to apply a treatment (typically a different treatment but may be the same treatment) configured for the particular situation given the treatment plan and farming objective. To expand, the farming machine is configured to provide the "appropriate" treatment in a situation rather than a predetermined treatment that may be "inappropriate" given the context. For example, the farming machine may apply a first herbicide treatment to a first type of plant (e.g., a first variable treatment at a first rate) and a second herbicide treatment to a second type of plant (e.g., a second variable treatment at a second rate). Overall, in this operational mode, the farming machine will see an object or treatment for treatment (e.g., a plant) and select the appropriate treatment for that object or feature.

### Additional Modalities

In some configurations, the farming machine includes a large number independently controllable treatment mechanisms. In this case, one or more treatment mechanisms may operate in a first mode while a different one or more treatment mechanism may operate in a second, different mode. This allows the farming machine to, for example, operate some treatment mechanisms in broadcast-uniform mode (e.g., along the crop row) and operate different treatment mechanism is spot-variable mode (e.g., in between crop rows) depending on the farming objective.

### V. SELECTING MODES FOR A MULTIMODE FARMING MACHINE

As described above, the farming machine (e.g., farming machine 100) machine has various treatment configurations. Each treatment configuration may enable one or more modes. For example, the treatment configuration may enable the farming machine to to operate in broadcast mode or spot mode, and/or enable the farming machine to operate in uniform mode or variable mode. Notably, the farming machine is configured to be multimodal, able to change between these configurations based on conditions in the operating environment (e.g., operating environment 102), conditions of the farming machine, the treatment plan, the farming objective, etc. More explicitly, the farming machine is configured to operate in any of broadcast-uniform mode, broadcast-variable mode, spot-uniform mode, and spot-variable mode. The farming machine is configured to change between these modes depending on the contextual conditions described above, some examples of which are provided hereinbelow.

The control system (e.g., control system 210) of the farming machine utilizes the mode selection module 212 to select the appropriate modes for performing the treatment plan to implement the farming objective. To select the appropriate mode(s), the farming machine inputs one or more of the (1) farming objective, (2) treatment plan, (3) farming actions for the treatment plan, (4) measurements from external systems (e.g., external systems 220), (5) measurements from machine component array (e.g., machine component array 230), (6) outputs from various plant or feature identification models that affect treatments applied by the control system of the farming machine, (7) configurations of elements in the machine component array, etc., and determines the appropriate mode(s). The control system then determines and implements the appropriate treatment configuration for the farming machine.

The control system may also determine the appropriate treatment using the treatment determination module 214 using similar inputs (as described below). Some examples of determining the appropriate treatment configuration and treatment mode are provided below. Notably, given the wide range of conditions that may serve as an input, it should be understood that these are just examples and many other mode selections are also possible.

### First Example - Selecting Broadcast-Uniform Mode

A farming machine is configured to select between the various operational modes and modify its treatment configuration above as described. In this example, the farming machine is configured to autonomously apply a growth promoter to identified crops in the field (e.g., farming actions) to increase the size and mass of the crops before harvest (e.g., farming objective). To do so, the farming machine accesses images of the field captured by a detection mechanism (e.g., detection mechanism 110), applies a plant identification model to the images to identify plants for treatment, and applies a treatment determination module 214 to the identified plants to determine a treatment for the plant (e.g., a prescription and a treatment area). Due to the growth stage of the plants, the farming machine is configured to apply a uniform treatment to each identified plant in the field.

When determining the treatment, the farming machine also determines a treatment buffer for the treatment based on, e.g., an estimation of error of a position of the treatment mechanism(s) that apply the determined treatment. As an example, the error may increase on rough terrain, in windy conditions, or due to mechanical fatigue (because the treatment mechanism is moving in unexpected ways).

Within this context, the farming machine preferably operates in spot-uniform mode. That is, the farming machine identifies and treats individual, identified plant as it travels through the field. However, if the determined treatment buffer becomes too large, it may be impossible for the farming machine to accurately and efficiently treat individual plants in the field in spot mode. For instance, it may be too windy for the farming machine to treat and individual plant with a high probability and precision.

As such, the mode selection module 212 may instruct the farming machine to modify its treatment configuration to operate in broadcast-uniform mode rather than spot-uniform mode when the treatment buffers are too large such that all identified plants are treated.

### Second Example - Selecting Broadcast-Variable Mode

A farming machine is configured to select between the various operational modes and modify its treatment configuration as described above. In this example, the farming machine is configured to autonomously apply a defoliant (or some other crop treatment such as plant growth regulators, desiccators, etc.) to identified crops in the field (e.g., farming actions) to remove leaves from the crops before harvest (e.g., farming objective). To do so, the farming machine accesses images of the field captured by a detection mechanism (e.g., detection mechanism 110), applies a canopy detection model to the images to identify canopy characteristics, and applies a treatment determination module 214 to the canopy characteristics to determine a treatment for the plants (e.g., a prescription and a treatment area).

In this example, at this stage in the cultivation cycle, the plants are approximately ready for harvest and have a high enough density that treating plants in broadcast mode rather than spot mode is appropriate. However, due to disparate treatments at previous stages of the cultivation cycle, some areas of the field have healthier plants than others. For example, a majority of the field may have plants having approximately the same amount of mass in the canopy because they received the standard fertilizer treatment during a previous cultivation stage. Some portions of the field, however, include plants with a lower total canopy mass because those portions inadvertently received a smaller fertilizer treatment than the remainder of the field (due to machine error).

Within this context, the farming machine is configured to operate in broadcast-uniform if the farming machine detects that the canopy characteristics are within an expected set of canopy characteristics. For instance, the farming machine will operate in broadcast-uniform mode when the canopy mass is within a first, nominal range of canopy mass. However, the farming machine is configured to operate in broadcast-variable mode if the farming machine detects the canopy mass is outside the first, nominal range of canopy mass. This is because treatment associated with the first range of canopy mass would be too great for the portions of the field that received less fertilizer and have less canopy mass.

As such, as the farming machine travels through the field treating plants, mode selection module 212 may instruct the farming machine to modify its treatment configuration and operate in broadcast-variable mode rather than spot-uniform mode when it detects a sufficient reduction in canopy. In this manner, the farming machine treats all the plants appropriately, rather than overtreating some of the plants.

### Third Example - Selecting Spot-Uniform Mode

A farming machine is configured to select between various operational modes and modify its treatment configuration as described above. In this example, the farming machine is configured to autonomously apply an insecticide to identified crops in the field (e.g., farming actions) to prevent pests from harming the plants during cultivation (e.g., farming objective). To do so, the farming machine accesses images of the field captured by a detection mechanism (e.g., detection mechanism 110), applies a plant density detection algorithm to the images to identify plant densities in the operating environment, and applies a treatment determination module 214 to the plant densities to determine a treatment for the plants (e.g., a prescription and a treatment area).

In this example, based on both the stage of the cultivation cycle and computer vision analysis of captured images, the plants are approximately the same size and have an approximately standard plant density in the environment. Additionally, the manager may comports with regulations for the operating environment and elects to apply the maximum amount of pesticide in the field. However, due to a plant disease in the field at a previous time in the field, some areas of the field are unexpectedly barren, although that may be unknown to the farmer.

Based on this, the manager of the agricultural field instructs an autonomous farming machine to apply the insecticide in broadcast-uniform mode, where the uniform dose adheres to the maximum dose allowed per plant in the area and is applied in a broadcast fashion so far as the plant density in the area is above a threshold plant density. For instance, the farming machine will operate in broadcast-uniform mode when the plant density is above a threshold plant density. However, the farming machine is configured to operate in spot-uniform mode if the farming machine detects the plant density is below the threshold plant density. This is because broadcast treatment above a threshold density is economically efficient, while broadcast treatment below the threshold density is not economical.

As such, as the farming machine travels through the field treating plants, mode selection module 212 may instruct the farming machine to modify its treatment configuration and operate in spot-uniform mode rather than broadcast-uniform mode when it detects a sufficient reduction in plant density such that all plants are appropriately treated.

### Fourth Example - Selecting Spot-Variable Mode

A farming machine is configured to select between the various operational modes and modify its treatment configuration as described above. In this example, a manager of a farming machine intends to configure a farming machine to autonomously apply an herbicide to weeds in a field, to identified crops in the field (e.g., farming actions) to perform precision weeding (e.g., farming objective). To do so, the farming machine accesses images of the field captured by a detection mechanism (e.g., detection mechanism 110), applies a plant identification model to the images to identify weeds, and applies a treatment determination module 214 to the canopy characteristics to determine a treatment for the plants (e.g., a prescription and a treatment area).

In this example, the manager determines that the spot-variable mode is the most applicable to her field given the low density and variability of weeds in her field. However, the farmer inadvertently configures the farming machine to operate in broadcast-uniform mode, and the farming machine begins treating the field in this manner. As the farming machine travels through the field treating plants, the control system executes, e.g., a treatment characterization model configured to determine the efficacy and efficiency of treatments as they are being applied to the field.

Because the farming machine is operating in broadcast-uniform mode in a low-density high variability plant environment, the treatment characterization model determines that the farming machine is over-treating plants in the operating environment and is not acting according to the farming objective. In turn, the control system transmits a notification to the manager's client device that the farming machine may be misconfigured. The farming machine receives a notification from the client device to change the treatment configuration and operate in a spot-variable configuration.

As such, as the farming machine travels through the field treating plants, mode selection module 212 may instruct the farming machine to change its treatment configuration and operate in spot-variable mode rather than broadcast-uniform mode based on instructions from the client device as it travels through the field.

To conclude, the preceding examples are meant to be illustrative. The farming machine may change configurations from an initial treatment configuration to a subsequent treatment configuration as appropriate given the content and context of the field.

### VII. DETERMINING TREATMENTS FOR MULTIMODE FARMING MACHINES

The farming machine (e.g., farming machine 100) includes a control system (e.g., control system 210) that implements a treatment determination module 214. The treatment determination module 214 inputs one or more of (1) the operational mode of the farming machine, (2) the treatment mode of the farming machine, (3) farming objective, (4) treatment plan, (5) farming actions for the treatment plan, (6) measurements from external systems (e.g., external systems 220), (7) measurements from machine component array (e.g., machine component array 230), (8) outputs from various plant or feature identification models that affect treatments applied by the control system of the farming machine, (9) configurations of elements in the machine component array, etc., and determines treatments for objects, plants, substrates, features, etc. in the field. Several examples of treatment determinations based on a variety of these factors are discussed hereinbelow. However, these examples are intended to be illustrative and other examples are also possible.

### Treatment Areas

The treatment determination module 214 may determine treatments based on an expected treatment area in a field.

In an example configuration, the treatment determination module 214 generally determines a treatment for an identified plant based on the treatment prescription for that plant and the treatment area for that plant. This treatment prescription is a calculated dose of treatment tailored for the identified plant. In effect, the treatment dose defines the extent and intensity of the treatment. The treatment area is the spatial area to which the treatment prescription will be applied. The treatment area may affect a treatment prescription, if the prescription is based on area.

The treatment determination module 214 determines the treatment for a uniform treatment that is a function of the number of treatment mechanisms applying the treatment, a nozzle spacing of the treatment, and an activation time of the treatment mechanism. These factors, in combination, determine the approximate "spot" size of the treatment, or the treatment area. The dose applied to the treatment area depends on, e.g., the strength of the chemical, the flow rate and pressure of the treatment mechanism, the cumulative sum of the distribution curves of each nozzle (because the flow rate is a function of the angle of vector of the treatment spray relative to the nozzle tip outlet orientation) and other mechanical features of the farming machine.

Variable rate treatments are more challenging to implement than uniform treatment because it involves crafting a specific treatment prescription for an identified plant. In this case, the treatment determination module 214 determines a treatment prescription and treatment area with a precision that meets the farming objective for the individual plant. To do so, the farming machine is configured with various sensors and models to determine variable treatments for different plants reflecting a range of factors. The treatment determination model 213 can, for example, consider the type and size of the plant, the nature of the treatment needed, and local conditions like soil quality, weather, and light exposure, etc. when determining a treatment. Each of these factors may indicate one or more of a plant's individual characteristics that aid in determining an adequate treatment procedure specific to the plant.

The farming machine described herein is configured to implement variable treatments in a variety of ways. Similar to the description above, the base calculation for a variable treatment is similar to that of a uniform treatment - a number of treatment mechanisms applying the treatment, a nozzle spacing of the treatment, and an activation time of the treatment mechanism. However, as described above, this creates a uniform dose when characteristics of the farming machine remain constant. To enable variable doses, the farming machine described herein is configured to change various additional machine conditions to modify a treatment dose applied to plants. For example, the farming machine is configured to control one or more of the (1) pulse width for a treatment mechanism or group of treatment mechanisms, (2) pressure for a treatment mechanism or group of treatment mechanisms, (3) flow rate for a treatment mechanism or group of treatment mechanisms, (4) spray shape for a treatment mechanism or group of treatment mechanisms, (5) a number of treatment mechanisms used, etc. For the spray shape, in some configurations, the farming machine is not configured to control the spray shape but, instead, is configured to control the pulse width modulation, flow, parallel firings, etc.

Each of these factors can modify a dose for a treatment prescription.

In an example, modulating a pulse width of a signal used to activate a treatment mechanism can modify a dose applied by the treatment mechanism. To illustrate, increasing the duty cycle (e.g., pulse width) of a treatment mechanism may increase a dose for a given time, while decreasing the duty cycle of a treatment mechanism may decrease the dose for the same given time. Pulse width modulation may also be used to control droplet size (with, e.g., larger droplets increasing the dose, and smaller droplets decreasing the dose), startup speed of the nozzle (with, e.g., a faster startup increasing the dose, and slower startup decreasing the dose), etc. The farming machine may include various additional elements to monitor and control pulse width to enable variable rate treatments (e.g., rapid switching devices and elements, etc.). Accordingly, the farming machine can utilize pulse width to apply different treatments in a same treatment area size.

In an example, controlling pressure of a treatment mechanism can modify a dose applied by the treatment mechanism. To illustrate, increasing the pressure of a treatment mechanism (and/or one or more aspects of a fluidic system controlling a treatment mechanism) may increase a dose for a given time, while decreasing the pressure of a treatment mechanism (and/or one or more aspects of a fluidic system controlling a treatment mechanism) may decrease a dose for the given time. Pressure control may also be used to control droplet size (with, e.g., larger droplets increasing the dose, and smaller droplets decreasing the dose). The farming machine may include various additional elements to monitor and control the pressure for enabling variable rate treatments (e.g., pressure regulators, pressure monitors, valves, etc.). Accordingly, the farming machine can utilize pulse width to apply different treatments in a same treatment area size.

In an example, controlling flow rate and/or number of treatment mechanisms employed can similarly modify a dose applied by a treatment mechanism. To illustrate, increasing the flow rate of a treatment mechanism (and/or one or more aspects of a fluidic system controlling a treatment mechanism) may increase a dose for a given time, while decreasing the flow rate of a treatment mechanism (and/or one or more aspects of a fluidic system controlling a treatment mechanism) may decrease a dose for the given time. Similarly, decreasing a number of treatment mechanisms may increase a dose for a given time (per area), while increasing the number of treatment mechanisms may decrease the dose for the given time (per area). Other examples are also possible, including those that combine one or more of the various controls.

To provide a contextual illustration, consider a farming machine configured to operate in spot-variable mode. The farming machine accesses an image including a first plant and a second plant. The first plant has a first, large area and is a first, easily controlled species (e.g., responds well to herbicides). The second plant has a second, small area and is a second, resistant weed species (e.g., does not respond well to herbicides).

The farming machine identifies the plants in images captured by the detection mechanism as the farming machine travels through the field. The farming machine determines a first prescription and a first treatment area for the first plant, and a second prescription and a second treatment area for the second plant. The treatment determination module determines the first prescription for the first plant is a low dose (because it is easily controlled) and the treatment area is large because the plant is large. Additionally, the treatment determination module determines the prescription for the second plant is a high dose (because it is resistant) and the treatment area is small because the plant is small.

In this situation, in uniform mode, the farming machine would have a hard time treating both the first plant and the second plant appropriately because the prescriptions are different. That is, the farming machine may not be able to apply a high dose to a small area, and a low dose to a large area. In variable mode, however, the farming machine can control the dose using other factors. For instance, in this situation, the farming machine may decrease the pulse width for the treatment mechanisms applying treatments to the first plant, and increase the pulse width for the treatment mechanism applying treatments to the second plant. In this way, the farming machine can apply the first prescription in the first treatment area, and the second prescription in the second treatment area.

### Feature Density

The treatment determination module 214 may determine treatments (and/or modes) based on a feature density observed in the field.

In some examples, a farming machine may apply a first, uniform treatment to a first type of plant in a field and a second, variable treatment to a second type of plant in a field. In this case, the treatment determination model 214 may determine whether to apply a uniform treatment or a variable treatment to plants in the field based on what is observed in the operating environment. Additionally, the treatment determination model 214 may determine the treatment prescription and/or treatment area based on the determined treatment.

To determine whether to apply a uniform treatment or a variable treatment (either in broadcast or spot operational modes), the control system may apply one or more algorithms to determine a density of each type of plant in a field. For example, using the context provided above, the farming machine may access an image (or images) of the field as it travels through the field, apply a density recognition algorithm to the image, and determine a density of the first type of plant in the field and density of the second type of plant in the field (or some field portion such as that represented in the image).

Density can refer to several quantifications of identified plant type(s) in the field (or field portion). For example, the density may quantify one or more of (1) a number of pixels in the image classified as each plant type in the field (or field portion), (2) a relative number of pixels classified as each type of plant in the field (or field portion), (3) a count of each type of plant in the field (or field portion), (4) a relative count of each type of plant in the field(or field portion), (5) a mass of each type of plant in the field (or field portion), (6) a relative mass of each type of plant in the field (or field portion), (7) a probabilistic determination describing "single plant type vs. multiple plant type," (8) a resource requirement for the plant or plants in the field (or field portion), etc.

The treatment determination module 214 determines whether to apply a uniform treatment or a variable treatment based on the determined density. As a simple example, the treatment determination module 214 may determine to apply a uniform treatment if the density indicates that all of the plants in the field are the first type of plant and may determine to apply a variable treatment if the density indicates that all of the plants in the field are the second type of plant. In a more complex example, the treatment determination module 214 may determine to apply a uniform treatment in the field if the density indicates the relative count of first plant to second plant is above a threshold. To illustrate, the farming machine may determine to apply uniform broadcast treatments if the density of the first plant relative to the second plant is above a threshold (because that modality is sufficient to accomplish the farming objective) and may determine to apply variable spot treatments if the density of the first plant to the second plant is below a threshold.

To provide a contextual example, consider a farming machine configured to apply a first treatment to both a first type of plant and a second type of plant in the field. The treatment is an herbicide that will kill a first type of plant (e.g., weeds), and increase the dryness of a second type of plant (e.g., crops). The farming objective in this situation is to prepare crops in the field for harvest and remove weeds that escaped previous treatments in the cycle.

As the farming machine travels through the field on its treatment pass, the farming machine operates in broadcast-uniform treatment mode and applies a uniform treatment to all plants when the density of crops in the operating environment is above a threshold level. The threshold level corresponds to a density where it is economically beneficial (e.g., increase yield, price per bushel, etc.) to apply treatments in a broadcast-uniform manner rather than a spot variable manner. When the farming machine access an image where the density is below the threshold level, the farming machine changes operating modes and begins applying treatments in spot-variable mode. In some configurations, there may be different thresholds for corresponding to different modes and different treatments. Of course, other examples are possible. For instance, the farming machine may be configured to treat plants in spot-uniform mode if the weed density is high and change modes to broadcast-uniform when the weed density is low.

### Canopy Characteristics

The treatment determination module 214 may determine treatments (and/or modes) based on canopy characteristics of a plant canopy in the field.

To provide some context, traditional plant identification models are able to identify different plants, plant parts, and plant characteristics within an image using various techniques and methodologies. However, these traditional methodologies often involve naively scanning the entire field of view presented to the detection mechanism and classifying each element therein. This comprehensive surveying approach adds to the computational load due to the classification and identification of every visible plant element and either potentially slowing down real-time operations or characterizing plants and plant parts in a manner that can more appropriately determine plant treatments.

These existing plant identification methodologies often fall short in recognizing specific plant components that are critical in determining accurate and individualized treatment protocols for variable treatments. As an example, these models aren't adept at differentiating if a leaf is physically attached to a plant or if it has already fallen to the ground - an important distinction for many treatment procedures based on canopy health. Similarly, they also classify both the stalks and fruits of plants when determining a treatment, when the presence of fruit in the canopy have more substantial implications for certain treatment protocols.

Moreover, other traditional plant identification methodologies utilize satellite or drone imagery and calculate aggregate statistics based on the images (e.g., Normalized Difference Vegetation Index, reflectance measurements, color measurements, etc.). These techniques may have the capability to identify between types of plants, or plants and the ground, but they are unable to accurately characterize individual parts of plants in a way that meaningfully informs plant treatments. Additionally, these methods have a delay between plant identification and treatment (e.g., old satellite images) and the agronomic context and conditions in the field may have changed in the intervening time, rendering real-time methodologies better suited for tailored approaches.

Some of these deficiencies in traditional plant identification methodologies have caused the use of less effective and/or less efficient defoliation techniques (e.g., uniform treatments). These techniques typically treat all identified plants in the same manner, regardless of each individual plant's specific needs or conditions. The inability to tell the difference, for instance, between a leaf that is still attached to a plant versus one that has already fallen to the ground, embodies such shortcomings. For instance, a traditional plant identification technique would identify both the fallen and attached leaf as a "leaf" for defoliation, even though the leaf has already been defoliated. The resulting treatment determined from that misidentification would therefore be suboptimal.

As such, the control system is configured to determine a plant canopy and canopy characteristics in the field, and the treatment determination module 214 may determine treatments based on the plant canopy and its characteristics. As described herein, a plant canopy refers to an aboveground portion of an individual plant or group of plants. The plant canopy is often visualized as a continuous cover resembling an umbrella-like structure, but other shapes are also possible depending on the type of plant and/or combination of plants. The plant canopy extends outward from the central stem or trunk of the plant(s) and encompasses branches, leaves, flowers, fruits, and other such vegetative and reproductive structures that collectively form the uppermost layer of a vegetation system or crop.

In some configurations of the detection models described herein, the plant canopy may be defined as only those portions of a plant a certain distance above the substrate. The distance may, depending on the plant, above a threshold height in the field or above a bottom height and below a top height. For example, consider a cotton plant having a stem protruding upwards from the substrate. From top to bottom the steam includes several leaves without cotton bolls, an array of cotton bolls and leaves, and an array of leaves and flowers. In this example, the threshold height for the canopy may be the height at which the first bolls appear, and/or the bottom height may be the height at which the first bolls appear, and the top height is the height at which bolls are no longer present. Thus, the farming machine may only classify plant parts above the bottom height or below the top height as plant canopy. In this manner, the control system can identify plant parts only in portions of the image that are relevant for, e.g., defoliating the leaves so only the bolls remain present for harvest. Similar methodologies may be applied for plant growth regulators based on heigh of the plants in the canopy or a biomass of plant parts in the canopy.

The control system may also determine various characteristics of the plant canopy once it is identified. For example, the control system may determine one or more of canopy mass, canopy volume, leaf count, leaf angle, leaf spacing, leaf color, leaf shape, leaf size or relative size, plant color, plant shape, plant size or relative size, leaf density, leaf mass, plant health, plant growth stage, nutrient levels, etc. The control system may determine any of the plant characteristics relative to an accessed or expected set of plant characteristics (e.g., relative to an expected leaf count at a particular time in a cultivation cycle), or may determine any of the plant characteristics relative to an aggregate value of the plant characteristics for the field (e.g., relative to an average leaf size for the field). For example, the control system may determine an NDVI value for a particular leaf relative to an expected NDVI value for a leaf at that point in time, or relative to a statistical average of other leaves in the field.

The control system can one or more different algorithms to determine a plant canopy and plant canopy characteristics.

In a first example, the control system may apply a convolutional neural network configured to determine which pixels or region of pixels in the image may represent the plant canopy, identify pixels representing the plant parts in the plant canopy in those pixels or region of pixels, and then extract canopy characteristics based on identified plant parts. To illustrate, the control system may identify pixels in the image above a threshold height for analysis as plant canopy and determines which pixels in the image above the threshold height represent plant parts. The control system extracts various canopy characteristics from the image.

In a second example, the control system may generate a three-dimensional representation of the environment (e.g., depth maps, point clouds, and classified point clouds). For example, the farming machine may incorporate one or more of the various techniques described in U.S. Patent Number (11,367,207) titled, "Identifying and Treating Plants using Depth Information in a Single Image," which is hereby incorporated by reference in its entirety. The control system may determine the plant canopy and the canopy characteristics from that three-dimensional representation of the environment.

In a third example, the control system may generate a volumetric representation of the environment. For example, the control system may use any of the techniques described herein to identify pixels in images, depth maps, a gridded map, an elevation map, or point clouds (or some combination of those techniques such as a gridded map that represents elevations) representing plant canopy, and generate a volumetric representation of the environment that collapses the identified canopy and other features into voxels. The voxels are then aggregated in a manner that represents the operating environment of the farming machine. The control system may determine the plant canopy and the canopy characteristics from that volumetric representation of the environment.

The treatment determination module 214 determines a treatment for each identified plant based on the plant canopy for a plant or an individual plant.

For example, the control system may identify a first plant having a first plant canopy with first canopy characteristics, and a second plant having a second plant canopy with second canopy characteristics. The treatment determination module 214 determines a first treatment for the first plant canopy (e.g., a defoliant treatment) based on the first canopy characteristics (e.g., number of leaves, canopy volume), and a second, different treatment (e.g., a defoliant treatment) based on the second canopy characteristics (e.g., number of leaves, canopy volume). In other words, the treatment determination module 214 may determine a variable treatment for the farming machine to apply in spot-variable mode. The treatment determination module 214 may also determine a uniform treatment that would be sufficient for both he first plant and the second plant based on their canopies and canopy characteristics.

**In** another example, the control system may identify a first plant having a first plant canopy with first canopy characteristics, and may determine an absolute or relative difference between the first plant canopy and first canopy characteristics and a statistical average of the all plants having the same type as the first plant in the field. The treatment determination module 214 determines a first treatment for the first plant canopy (e.g., a growth promoter) based on the first canopy characteristics (e.g., canopy mass, volume, and health) relative to the aggregate canopy characteristics for the field (e.g., avg. canopy mass, volume, and health).

These two examples are meant to be illustrative, and many other examples are also possible. Additionally, the farming machine may select and implement configurations based on the determined plant treatments (e.g., selecting between broadcast and spot operational modes, and or selecting between uniform and variable modes).

**In** some configurations, determinations of plant canopy characteristics may replace other measurements made by the farming machine and used to determine plant treatments. For instance, a plant canopy mass can be used in lieu of plant health, or the leaf number may be used as a proxy for number of plants (based on total number of leaves). Thus, the farming machine can infer one or more additional characteristics about a plant based on its plant canopy and canopy characteristics, and determine a treatment based on those inferred additional characteristics.

Finally, in some configurations, the treatment determination module 214 can determine treatment configurations and operational modes by aggregating plant canopy and canopy characteristics data from multiple plants. So, for example, the treatment determination module may select a treatment configuration, mode, and treatment for a field based on the canopy and characteristics of a single plant, a subset of plants, or all plants in a field.

### Plant Type and Characteristics

The treatment determination module 214 may determine treatments (and/or modes) based on characteristics of a plant (or group of plants) in the field.

The section above describes the treatment determination module 214 determining treatments for plants in the field based on its plant canopy and canopy characteristics, however, at a more general level, the treatment determination module 214 may determine treatments and/or modes based on characteristics of identified plants. In other words, using any of the methods (and/or models) above that can be used to identify a plant canopy and canopy characteristics, the treatment determination module 214 can determine characteristics (or features) for a plant or any part of a plant.

Various characteristics that may inform determination of a plant treatment include, for example, a size of the plant, a mass of the plant, a growth stage of the plant, a phenology measurement of the plant, a physiology measurement of the plant, a health of the plant, a species or other categorization of the plant, an insect presence of the field, a previous (e.g., on a previous pass) or traditional (e.g., standard practice) treatment of the plant, a previous or historic farming objective, a previous or historic treatment plant, etc. The characteristics may also be determined for a group of plants rather than individual plants.

Additionally, various characteristics of the operating environment may inform treatments for the plant. These characteristics may include, e.g., an operating condition of an element of the farming machine, previous results of farming actions, previous or traditional farming actions, the farming objective, previous or traditional farming objectives, the weather or environmental conditions, previous or traditional weather or operating conditions, etc.

In some configurations, the treatment determination module 214 may determine treatments based on the operational mode and/or treatment mode of the farming machine. For instance, the farming machine may select treatments from a first set of treatments when operating in broadcast-variable mode and select from a second set of treatments when operating in broadcast-uniform mode. Similarly, the farming machine may select treatments from a third set of treatments when operating in broadcast-variable mode and select treatments form a fourth set of treatments when operating in spot-variable mode. Other examples possible.

Whatever the input, the treatment determination module 214 determines the appropriate treatment for an identified plant or plant in the field and determines the appropriate mode(s) for implementing to apply the treatment. That is, the control system accesses images of the environment, applies on or more models to identify plants, plant characteristics, environment characteristics, etc. from the image, and the treatment determination model determines an appropriate treatment and/or mode for the farming machine based on the plant characteristics, environment characteristics, etc. The farming machine implements the appropriate treatment configurations to execute the treatments and modes to perform the treatment according to the farming objective.

### Cover Crop

The treatment determination module 214 may determine treatments for plant in the field based on whether the plant is a cover crop and a cover crop plan for the field.

As described above, the treatment determination module 214 determines and applies plant treatments in many situations. One such situation is, for example, identifying a first plant and a second plant, and determining suitable treatments for those treatments. Some of the solutions to this include, for example, the binary approach of applying "Treatment A" for the first plant and "Treatment B" for the second (e.g., uniform treatments). Another example includes, determining a different strength of a treatment for identified plants (e.g., variable treatments). However, in many situations, more complex and nuanced approaches are often required. For instance, how the treatments might be modified if the plants are in different stages of their growth cycle, or if the plants are growing in proximity to other plant species.

One of these more intricate and nuanced approaches is cover cropping. Cover cropping is an agricultural technique where specific crops are grown not for their crop yield, but rather for their influence on the soil, weather conditions or their interaction with pests, weeds and diseases. Cover crops are generally seeded and grown between (spatially) the crops that are grown for yield (e.g., "cash crops"). Oftentimes, cover crops are selected in for the benefits it provides to the operating environment, including soil erosion prevention, enhancement of soil fertility and quality, retention of soil moisture, and suppression of weeds.

A classic example of a cover crop and cash crop duo is clover and corn. Corn is cultivated for its commercial value because it is a high-yielding grain crop. However, corn is a heavy feeder, meaning it can deplete soil nutrients quite drastically especially nitrogen. Clover, on the other hand, is often used as a cover crop in corn fields. Clover can "fix" nitrogen from the atmosphere into the soil, replenishing the nitrogen that the corn has consumed. Clover also helps in weed suppression and soil erosion control. Once the corn is harvested, the clover continues to grow, enriching the soil for the next planting season. This way, the corn and clover pairing not only enables a profitable crop (corn) each season but also maintains the soil health for future cultivation.

While cover cropping brings numerous benefits, implementing this agricultural process alongside a cash crop (e.g., corn) introduces considerable complexities, particularly when it comes to the application of plant treatments. For instance, accurately identifying the intended recipient plant and applying the treatment to the intended recipient plant are important to avoid any possible contrasting or counterproductive effects. For example, consider a farming machine configured to apply herbicide designed to control weeds in a corn field. The herbicide, while good for killing weeds, may also negatively impact the growth of a clover cover crop if they're not correctly identified and separately treated. Conversely, a fertilizer beneficial to the growth of the cover crop may contribute to the overgrowth of clover if misapplied. Furthermore, certain treatments may have to be varied in terms of concentration or frequency depending upon weather conditions, crop maturity stages, and pest activity. Balancing the competing needs of cash and cover crops calls for precision, robust models and training, and adequate tools such as a multimodal farming machine configured to implement cover cropping.

Oftentimes, managers of a field implement cover cropping by developing and implementing a cover cropping plan as part of their farming objective. A cover crop plan details the interweaving of the cash crop with a cover crop both spatially and temporally. The cover crop plan includes the various farming actions necessary to implement the cover crop plan. A cover crop plan takes into consideration not only the different plant species but also the soil health, climate conditions, and potential threats from pests or weeds. It converges agronomic knowledge with plant science to promote an optimize the farming objective a manager.

In turn, the treatment determination module 214 identifies treatments for plants in the field according to the cover crop plan. To do so, the control system inputs images of the field and identifies the various plants and features in the image, and the treatment determination module 214 determines treatments for the identified plants based on the cover crop plan. In effect, the treatment determination module 214 determines treatments for plants in the field to optimize results based on the cover crop plan (e.g., as part of the farming objective).

There are many ways methods in which the plant determination module 214 may determine treatments according to a cover crop plan. Within the examples illustrated in the next several paragraphs, the first plant type is the cash crop, the second plant type is the cover crop, and the third plant type is an unwanted plant such as a weed.

In a first example, the cover crop plan calls for applying to herbicides to the third plant type in a manner sufficient to kill those plants, but without killing plants of the first type and the second type. To do so, the control system inputs images of the operating environment and identifies each type of plant in the image. The treatment determination module determines a variable rate treatment for each identified plant of the third type. Importantly, each determined variable treatment is sufficient to kill plants of the third type, while minimizing damage to the first and second type. For instance, the plant treatment module may set a maximum prescription for the variable rate treatment that is sufficient to kill an early stage third type plant, but insufficient to kill the robust first type plant or second type plant. In another example, the plant treatment module may elect to minimize the treatment area for the treatment prescription in a manner the preserves as much of the second type of plant as possible.

In a second example, the cover crop plan calls for maintaining a buffer between the first type of plant and the second type of plant ("crop buffer"). The crop buffer is configured to preserve the health of the first type of plant by controlling its competition with the second type of plant for resources. In this case, the treatment determination module 214 may determine variable treatments for the second type of plant that will regulate the growth of those plants (e.g., spatially, size, etc.) while maintaining the health of the first type of plant.

In a third example, the cover crop plan calls for maintaining an appropriate density of cover crop, or relative density between cash crop and cover crop, in the field. In this case, the treatment determination module 214 may determine uniform or variable treatments for the third type of plant if the density is too high. The uniform or variable treatments, when applied to the third type of plant, maintain the desired density or relative density in the field.

In a fourth example, the cover crop plan calls for maintaining a cover crop in a manner that improves some economic metric of the field. The economic metric may be, e.g., yield, price per bushel, field fertility, soil health, etc. In this case, the plant determination module 214 may select the appropriate treatments for any of the first type of plant, the second type of plant, and the third type of plant in a manner that optimizes the economic metric.

Notably, these are just illustrative examples, and there are many other instances where a treatment determination model 214 determines plant treatments to implement a cover crop plan. Additionally, the farming machine may change configurations (e.g., between broadcast and spot, or between variable and uniform), to implement the determined treatments.

### Residuals

The treatment determination module 214 may determine treatments based on whether the treatment is a residual and whether the residual adheres to a residual plan for the field.

To provide context, identifying and implementing effective residual treatments in agricultural practice can be a complex process enabled by the multimodal farming machine described above. Residuals refer to herbicides, insecticides, or other such treatments that persist in effectiveness for a prolonged period after their application. Residual treatments are beneficial as they extend the control of pest and weed populations beyond the initial application, reducing labor and treatment costs over a longer term. They may also mitigate crop damage during critical growth stages, enhancing yield. However, the successful employment of residuals takes into consideration complicated factors including the persistence and dissipation rates of the treatment, which can be influenced by environmental conditions like temperature and rainfall, as well as the chemical properties of the residues themselves.

Determining the type of residual to apply in a field a is not simply a matter of assessing a crop type and applying a treatment. Various aspects and other conditions may be contemplated (such as, e.g., environmental conditions, farming machine modes, soil conditions, etc.), each of which lead to a nuanced approach for determining a variable treatment, or modifying the mode of a farming machine. To illustrate, for example, the soil type where the crop is grown influences the residual's effectiveness since certain herbicides bind to certain soil types more readily than others which may affect the selected plant treatment. Moreover, the type of pests or weeds prevalent in the area, as well as the crop's growth stage, are also crucial parameters for consideration of a treatment prescription or a treatment area. For example, a soilapplied residual insecticide might be beneficial in the early stages of corn growth to control pests, but its usefulness would be limited later on at a different stage.

As such, a manager may implement a residual plan in a field to accomplish their farming objectives. A residual plan outlines various farming actions within the farming objective defining how and when residual treatments will be applied in a field based on multiple factors such as crop type, pest pressure, environmental conditions, soil type, and the particular residual's properties. Additionally, the residual plan may define various timings as they play a significant role in outcomes (e.g., which growth stage to apply, etc.).

In turn, the treatment determination module 214 identifies residual treatments for the field according to the residual plan. To do so, the control system inputs images of the field and identifies the various plants and features in the image, and the treatment determination module 214 determines residual treatments for operating environment based on the residual plan. In effect, the treatment determination module 214 determines treatments for the field to optimize results based on the residual plan (e.g., as part of the farming objective).

There are many ways methods in which the plant determination module 214 may determine residual treatments according to a residual plan. For example, the plant determination module 214 may identify field portions apply residuals in a broadcast manner, while other field portions to not apply residuals (or some other farming action) based on e.g., the plants identified, the weather, the residual plan, etc. Whatever the case, the multi-modal farming machine is configured to use different operational modes to apply residual treatments in the field.

Notably, the examples above are for illustrative purposes, and there are many other instances where a treatment determination model 214 determines plant treatments to implement a cover crop plan. Additionally, the farming machine may change configurations (e.g., between broadcast and spot, or between variable and uniform), to implement the determined treatments.

### Additional Information

Hereinabove, the control system and its constituent treatment determination module 214 for a multimodal farming machine have described many methods of determining plant treatments. Those methods may be implemented by one or more models for determining plant treatments. In some configurations, the treatment determination module may implement a model for each type of determination (e.g., a model for determining treatment areas, a model for determining feature density, a model for canopy detection, etc.), while in other configurations the treatment determination module may combine the functionality into one model or several models.

The various examples for determining treatments for a multimodal farming machine described hereinabove are intended to be illustrative examples, and other additional examples are possible. Moreover, aspects of the described technology enabling one example may be combined with aspect of the technology enabling another example. For example, the treatment determination module 214 may determine variable rate treatments based on canopy characteristics, and those variable rate treatments may be based on the treatment area for the canopy and/or a feature density within the canopy. As another example, the treatment determination module 214 may determine plant treatments according to a cover crop plan and may use identified plant types and characteristics as part of that determination.

### VIII. EXAMPLE MULTIMODAL FARMING MACHINE IMPLEMENTATIONS

A farming machine may be configured with multiple operational and treatment modes, and may determine plant treatments that leverage those different operational and treatment modes.

### First Example

FIG. 3 illustrates a workflow for determining a variable rate treatment for a farming machine to apply to identified plants, in accordance with one or more example embodiments. The workflow 300 may include additional or fewer steps, and the steps may occur in a different order. One or more of the stops may be repeated or omitted depending on the circumstances.

In this example, a farming machine is operating in a field. The field includes different regions, and each of those regions includes plants. A region can include one plant, a few plants, or many plants, depending on the configuration of the field. Some regions of the field include one type of plant, while other regions of the field include multiple types of plant. In this example, the growth stage of each plant in the field means that each of the plants has a canopy, and each plant canopy has canopy characteristics. Additionally, each plant or group of plants, can have characteristics. Plant and/or canopy characteristics may include, e.g., a number or volume of leaves, a relative or absolute depth of plants, a height of plants, etc. In other

The farming machine includes treatment mechanisms. The treatment mechanisms are configured to apply treatments to identified plants in the field. The farming machine can be configured such that the treatment mechanism (or, more generally, the farming machine) operate in one of several treatment configurations (i.e., treatment modes). The farming machine configurations can vary between various operational modes and/or treatment modes.

In this example, the farming machine includes a spot treatment configuration, broadcast treatment configuration, uniform treatment configuration, and variable treatment configuration. In the spot treatment configuration, a subset of treatment mechanisms is selected for treating the identified plant. The subset of treatment mechanisms applies a treatment to a treatment area for an identified plant. In the broadcast treatment configuration, all the treatment mechanism are selected for treating plants in the field. In the uniform treatment configuration, the treatment mechanisms which apply treatments to plants apply the same treatment to each plant. In the variable treatment configuration, the treatment mechanisms which apply treatments to plants apply a different treatment to each plant.

The farming machine (e.g., farming machine 100) autonomously travels through each region of the field (e.g., filed 160) treating plants (e.g., plants 104). The farming machine accesses 310 images for each region of the field. The images may be captured by an image acquisition system of the farming machine (e.g., detection mechanism 110). Each image includes pixels representing the objects in the field such as, e.g., plants, substrate, plant parts, plant canopy, etc.

The farming machine includes a control system (e.g., control system 130, 210), and the control system applies 320 a canopy recognition model to the images. The canopy recognition model may be implemented within a treatment determination module (e.g., treatment determination module 214) of the control system.

The canopy recognition model identifies 322 each plant in the image. The identified plants may be associated with the region of the field they were captured. The canopy recognition model identifies plants based on latent information in the pixels of the image representing the plant.

The canopy recognition model identifies 324 a plant canopy by identifying pixels in the image corresponding to the plant which represent the canopy (e.g., a canopy of one plant, more than one plant, a group of plants, etc.). Again, the canopy recognition model may due this based on latent information in the pixels representing the canopy. Similarly, the canopy recognition model determines 326 canopy characteristics for the plant using the pixels identified as representing the plant canopy.

The farming machine determines 330 a variable rate treatment for each plant based on the determined canopy characteristics for each plant. For example, the farming machine may determine a defoliant treatment for the plant. Determining the variable rate treatment may include determining control signals (e.g., control signals for the pulse width) for a treatment mechanism to generate the variable treatment.

The farming machine actuates 340 a treatment mechanism to implement the variable rate treatment. To do so, the farming machine actuates the treatment mechanism with the control signals configured for implementing the variable rate treatment.

### Second Example

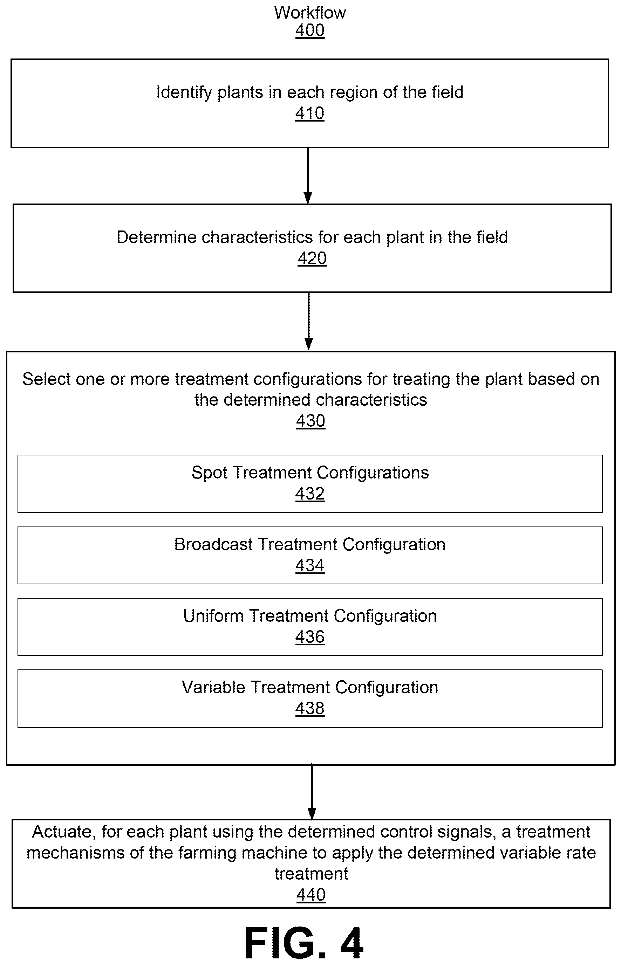

FIG. 4 illustrates a workflow for determining a variable rate treatment for a farming machine to apply to identified plants, in accordance with one or more example embodiments. The workflow 400 may include additional or fewer steps, and the steps may occur in a different order. One or more of the stops may be repeated or omitted depending on the circumstances.

In this example, a farming machine is operating in a field. The field includes different regions, and each of those regions includes plants. A region can include one plant, a few plants, or many plants, depending on the configuration of the field. Some regions of the field include one type of plant, while other regions of the field include multiple types of plant.

The farming machine includes treatment mechanisms. The treatment mechanisms are configured to apply treatments to identified plants in the field. The farming machine can be configured such that the treatment mechanism (or, more generally, the farming machine) operate in one of several treatment configurations (i.e., treatment modes). The farming machine configurations can vary between various operational modes and/or treatment modes.

The farming machine includes treatment mechanisms. The treatment mechanism are configured to apply treatments to identified plants in the field. The farming machine can be configured such that the treatment mechanism (or, more generally, the farming machine) operate in one of several treatment configurations (i.e., treatment modes). The farming machine configurations can vary between various operational modes and/or treatment modes per region. The farming machine can implement both an operational mode and a treatment mode simultaneously. Because there can be various numbers of plants per region, the operational mode can vary as granularly as plant by plant, as holistically as field by field, or somewhere in between.

The farming machine (e.g., farming machine 100) autonomously travels through each region of the field (e.g., filed 160) treating plants (e.g., plants 104). The farming machine accesses images for each region of the field. The images may be captured by an image acquisition system of the farming machine (e.g., detection mechanism 110). Each image includes pixels representing the objects in the field such as, e.g., plants, substrate, plant parts, plant canopy, etc., and features representing the characteristics of those objects. In turn, the farming machine identifies 410 plants in each region of the field and determines 420 characteristics for each identified plant in the field.

The farming machine includes a control system (e.g., control system 130, 210), and the control system applies a mode selection model to the images to determine the appropriate farming machine configuration to apply treatments. The mode selection model may be implemented as a mode selection module (e.g., mode selection module 214) of the control system. In some cases, the control system may also apply a treatment determination model to the images when determining treatment configurations.

The mode selection model selects 430 a treatment configuration for each plant in the image. The identified plants may be associated with the region of the field they were captured. The mode selection model selects a treatment configuration for the farming machine based on any of the indicators described hereinabove.

In this example, the farming machine includes a spot treatment configuration 432, a broadcast treatment configuration 434, uniform treatment configuration 436, and a variable treatment configuration 438. In the spot treatment configuration, a subset of treatment mechanisms are selected for treating the identified plant. The subset of treatment mechanisms apply a treatment to a treatment area for an identified plant. In the broadcast treatment configuration, all of the treatment mechanism are selected for treating plants in the field. In the uniform treatment configuration, the treatment mechanisms which apply treatments to plants apply the same treatment to each plant. In the variable treatment configuration, the treatment mechanisms which apply treatments to plants apply a different treatment to each plant.

The farming machine actuates 440 treatment mechanisms to treat the identified plants using the selected one or more treatment configurations for the region.

As the farming machine travels into a subsequent region of the field, the mode selection model may detect a change in one or more characteristics of the identified plants in that region. The change may indicate that the current treatment configuration of the farming machine is suboptimal. In turn, responsive to detecting the change, the mode selection model may select a different set of treatment configurations for implementing in the field based on the detected changes.

### IX. CONTROL SYSTEM

FIG. 7 is a block diagram illustrating components of an example machine for reading and executing instructions from a machine-readable medium. Specifically, FIG. 6 shows a diagrammatic representation of control system 130 in the example form of a computer system 700. The computer system 700 can be used to execute instructions 724 (e.g., program code or software) for causing the machine to perform any one or more of the methodologies (or processes) described herein. In alternative embodiments, the machine operates as a standalone device or a connected (e.g., networked) device that connects to other machines. In a networked deployment, the machine may operate in the capacity of a server machine or a client machine in a server-client network environment, or as a peer machine in a peer-to-peer (or distributed) network environment.

The machine may be a server computer, a client computer, a personal computer (PC), a tablet PC, a set-top box (STB), a smartphone, an internet of things (IoT) appliance, a network router, switch or bridge, or any machine capable of executing instructions 724 (sequential or otherwise) that specify actions to be taken by that machine. Further, while only a single machine is illustrated, the term "machine" shall also be taken to include any collection of machines that individually or jointly execute instructions 724 to perform any one or more of the methodologies discussed herein.

The example computer system 700 includes one or more processing units (generally processor 702). The processor 702 is, for example, one or more central processing units (CPUs), one or more graphics processing units (GPUs), one or more digital signal processors (DSPs), one or more controllers, one or more state machines, one or more application specific integrated circuits (ASICs), one or more radio-frequency integrated circuits (RFICs), or any combination of these. The computer system 700 also includes a main memory 704. The computer system may include a storage unit 716. The processor 702, memory 704, and the storage unit 716 communicate via a bus 708.

In addition, the computer system 700 can include a static memory 706, a graphics display 710 (e.g., to drive a plasma display panel (PDP), a liquid crystal display (LCD), or a projector). The computer system 700 may also include alphanumeric input device 712 (e.g., a keyboard), a cursor control device 714 (e.g., a mouse, a trackball, a joystick, a motion sensor, or other pointing instrument), a signal generation device 718 (e.g., a speaker), and a network interface device 720, which also are configured to communicate via the bus 708.

The storage unit 716 includes a machine-readable medium 722 on which is stored instructions 724 (e.g., software) embodying any one or more of the methodologies or functions described herein. For example, the instructions 724 may include the functionalities of modules of the system 130 described in FIG. 2. The instructions 724 may also reside, completely or at least partially, within the main memory 704 or within the processor 702 (e.g., within a processor's cache memory) during execution thereof by the computer system 700, the main memory 704 and the processor 702 also constituting machine-readable media. The instructions 724 may be transmitted or received over a network 726 (e.g., network 240) via the network interface device 720.

### X. ADDITIONAL CONSIDERATIONS

In the description above, for purposes of explanation, numerous specific details are set forth in order to provide a thorough understanding of the illustrated system and its operations. It will be apparent, however, to one skilled in the art that the system can be operated without these specific details. In other instances, structures and devices are shown in block diagram form in order to avoid obscuring the system.

Reference in the specification to "one embodiment" or "an embodiment" means that a particular feature, structure, or characteristic described in connection with the embodiment is included in at least one embodiment of the system. The appearances of the phrase "in one embodiment" in various places in the specification are not necessarily all referring to the same embodiment.

Some portions of the detailed descriptions are presented in terms of algorithms or models and symbolic representations of operations on data bits within a computer memory. An algorithm is here, and generally, conceived to be steps leading to a desired result. The steps are those requiring physical transformations or manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like. Furthermore, it has also proven convenient at times, to refer to arrangements of operations as modules, without loss of generality. The described operations and their associated modules may be embodied in software, firmware, hardware, or any combinations thereof.

It should be borne in mind, however, that all of these and similar terms are to be associated with the appropriate physical quantities and are merely convenient labels applied to these quantities. Unless specifically stated otherwise as apparent from the following discussion, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

Some of the operations described herein are performed by a computer. This computer may be specially constructed for the required purposes, or it may comprise a general-purpose computer selectively activated or reconfigured by a computer program stored in the computer. Such a computer program may be stored in a computer readable storage medium, such as, but is not limited to, any type of disk including floppy disks, optical disks, CD-ROMs, and magneticoptical disks, read-only memories (ROMs), random access memories (RAMs), EPROMs, EEPROMs, magnetic or optical cards, or any type of non-transitory computer readable storage medium suitable for storing electronic instructions.

The figures and the description above relate to various embodiments by way of illustration only. It should be noted that from the following discussion, alternative embodiments of the structures and methods disclosed herein will be readily recognized as viable alternatives that may be employed without departing from the principles of what is claimed.

One or more embodiments have been described above, examples of which are illustrated in the accompanying figures. It is noted that wherever practicable similar or like reference numbers may be used in the figures and may indicate similar or like functionality. The figures depict embodiments of the disclosed system (or method) for purposes of illustration only. One skilled in the art will readily recognize from the following description that alternative embodiments of the structures and methods illustrated herein may be employed without departing from the principles described herein.

Some embodiments may be described using the expression "coupled" and "connected" along with their derivatives. It should be understood that these terms are not intended as synonyms for each other. For example, some embodiments may be described using the term "connected" to indicate that two or more elements are in direct physical or electrical contact with each other. In another example, some embodiments may be described using the term "coupled" to indicate that two or more elements are in direct physical or electrical contact. The term "coupled," however, may also mean that two or more elements are not in direct physical or electrical contact with each other, but yet still co-operate or interact with each other. The embodiments are not limited in this context.

As used herein, the terms "comprises," "comprising," "includes," "including," "has," "having" or any other variation thereof, are intended to cover a non-exclusive inclusion. For example, a process, method, article or apparatus that comprises a list of elements is not necessarily limited to only those elements but may include other elements not expressly listed or inherent to such process, method, article or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B is true (or present).

In addition, use of "a" or "an" are employed to describe elements and components of the embodiments herein. This is done merely for convenience and to give a general sense of the system. This description should be read to include one or at least one and the singular also includes the plural unless it is obvious that it is meant otherwise.

Upon reading this disclosure, those of skill in the art will appreciate still additional alternative structural and functional designs. Thus, while particular embodiments and applications have been illustrated and described, it is to be understood that the disclosed embodiments are not limited to the precise construction and components disclosed herein. Various modifications, changes and variations, which will be apparent to those, skilled in the art, may be made in the arrangement, operation and details of the method and apparatus disclosed herein without departing from the spirit and scope defined in the appended claims.

## Claims

1. A method for determining a variable rate treatment for a farming machine to apply to identified plants, the method comprising:
accessing a plurality of images for each region of a plurality of regions in a field;
applying a canopy recognition model to the plurality of images for each region of the plurality of regions, the canopy recognition model configured to, for each region:
identify each plant in the region using the plurality of images for the region,
identify, for each identified plant, pixels of the plurality of images representing a plant canopy for the plant, and
determine, for each identified plant, canopy characteristics of the plant canopy based on the pixels;
determining, for each plant, control signals for a variable rate treatment based on determined canopy characteristics of the plant canopy for the plant; and
actuating, for each identified plant using the determined control signals for that plant, a treatment mechanism of the farming machine to apply the determined variable rate treatment to the plant.

2. The method of claim 1, wherein identifying pixels in the plurality of images representing the plant canopy comprises:
identifying a lower height of the plant canopy relative to a substrate;
identifying an upper height of the plant canopy relative to the substrate; and
applying the canopy recognition model to pixels corresponding to heights between the lower height and the upper height.

3. The method of claim 1, wherein identifying pixels in the plurality of images representing the plant canopy comprises:
identifying, based on the pixels of the plurality of images, one or more plant parts of each plant;
determining, for each identified plant part, whether the identified plant part corresponds to the plant canopy;
for each plant part corresponding to the plant canopy, defining those pixels as the plant canopy; and
determining canopy characteristics based on the plant parts identified as the plant canopy.

4. The method of claim 1, comprising:
determining an aggregate canopy characteristic for the region based on the determined canopy characteristics for individual plants in the region; and
determining the variable treatment for the region based on the aggregate canopy characteristic.

5. The method of claim 1, wherein determining control signals for the variable rate treatment for each plant comprises determining a treatment prescription and a treatment area for the plant.

6. The method of claim 5, wherein determining control signals for the variable rate treatment for each plant comprises determining a pulse width for the treatment mechanism to apply the treatment prescription in the treatment area.

7. The method of claim 1, wherein determining control signals for the variable rate treatment for each plant comprises determining signals to control one or more of a pressure for the treatment mechanism, a flow rate for the treatment mechanism, and a spray shape of the treatment mechanism.

8. The method of claim 1, wherein:
determining canopy characteristics of the plant canopy based on the pixels comprises identifying a volume of leaves in the plant canopy, and
determining control signals for the variable rate treatment for each plant in the region of the field based on determined canopy characteristics comprises determining a defoliant treatment to reduce the volume of leaves in the plant canopy.

9. The method of claim 1, comprising:
in a subsequent region of the plurality of regions, detecting a change in one or more canopy characteristics of the identified plants in the field as the farming machine travels through the field; and
responsive to detecting the change, determining a uniform treatment for the plurality of plants in the subsequent region based on the change in the one or more canopy characteristics.

10. The method of claim 1, wherein actuating the treatment mechanism of the farming machine to apply the determined variable rate treatment to the plant comprises implementing a configuration of a plurality of configurations for the farming machine.

11. A farming machine comprising:
an image acquisition system configured for capturing images of plants in a field comprising a plurality of regions;
a plurality of treatment mechanisms configured to apply variable treatments to plants in the field;
one or more processors; and
a non-transitory computer readable storage medium comprising computer program instructions for determining a variable rate treatment for a farming machine to apply to identified plants, the computer program instructions, when executed by the one or more processors, causing the one or more processors to:
capture a plurality of images for each region of a plurality of regions in the field;
apply a canopy recognition model to the plurality of images for each region of the plurality of regions, the canopy recognition model configured to, for each region:
identify each plant in the region using the plurality of images for the region,
identify, for each identified plant, pixels of the plurality of images representing a plant canopy for the plant, and determine, for each identified plant, canopy characteristics of the plant canopy based on the pixels;
determine, for each pant, control signals for a variable rate treatment based on determined canopy characteristics of the plant canopy for the plant; and
actuating, for each identified plant using the determined control signals for that plant, a treatment mechanism of the farming machine to apply the determined variable rate treatment to the plant.

12. The farming machine of claim 11, configured to perform the method of any of claims 1 to 10.
